(19) Europäisches Patentamt
European Patent Office
Office européen des brevets

(11) EP 4 691 220 A1

(12) **EUROPÄISCHE PATENTANMELDUNG**

(43) Veröffentlichungstag:
**11.02.2026 Patentblatt 2026/07**

(21) Anmeldenummer: 24193778.8

(22) Anmeldetag: **09.08.2024**

(51) Internationale Patentklassifikation (IPC):
**A01F 15/08** (2006.01)

(52) Gemeinsame Patentklassifikation (CPC):
**A01F 15/0833; A01F 15/08**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Deere & Company**
**Moline, IL 61265 (US)**

(72) Erfinder: **FILLOUX, ALEXIS**
**68163 Mannheim (DE)**

(74) Vertreter: **Stein, Stefan**
**John Deere GmbH & Co. KG**
**Global Intellectual Property Services**
**John-Deere-Straße 70**
**68163 Mannheim (DE)**

(54) **ZUGFAHRZEUG-BALLENPRESSEN-KOMBINATION, BALLENPRESSE UND VERFAHREN ZUM BETREIBEN EINER KOMBINATION ODER BALLENPRESSE**

(57) Die Erfindung betrifft Zugfahrzeug-Ballenpressen-Kombination (1), umfassend ein Zugfahrzeug (10) und eine Ballenpresse (12), wobei die Ballenpresse (12) eine Aufnahmeeinheit (126), zum Aufnehmen eines Ernteguts vom Boden und zur Zufuhr des Ernteguts in eine Presseinheit (112), und die Presseinheit (112) zum Aufnehmen des Ernteguts von der Aufnahmeeinheit (126) und zum Pressen eines Ballens umfasst. Die Kombination (1) umfasst weiter eine Steuereinheit (60) und einen Sensor (148) zur Erfassung eines Schallsignals, wobei die Steuereinheit mit dem Sensor (148) verbunden ist. Die Steuereinheit (60) ist konfiguriert, die Aufnahme des Ernteguts und das Pressen des Ballens (200) anhand eines Sensorsignals (300) des Sensors (148) zu charakterisieren. Die Erfindung betrifft weiter eine Ballenpresse (12) und ein Verfahren zum Betreiben einer Kombination (1) oder einer Ballenpresse (12).

FIG. 1

**Beschreibung**

Die Erfindung betrifft eine Zugfahrzeug-Ballenpressen-Kombination gemäss dem Oberbegriff des unabhängigen Anspruchs 1 und eine Ballenpresse gemäss dem Oberbegriff des unabhängigen Anspruchs 12 und ein Verfahren zum Betreiben einer Kombination oder Ballenpresse gemäss dem Oberbegriff des unabhängigen Anspruchs 13.

Ballenpressen, insbesondere Rundballenpressen oder Quaderballenpressen, werden zum Aufnehmen und Pressen von Erntegut, beispielsweise Stroh, Heu oder dergleichen eingesetzt. Die Ballenpresse kann dazu eine Aufnahmeeinheit zum Aufnehmen des Ernteguts umfassen, insbesondere zur Aufnahme des Ernteguts aus einem Schwad. Dabei kann das auf dem Boden liegende Erntegut mit der Aufnahmeeinheit, insbesondere einer Pick-up, aufgenommen werden. Die Ballenpresse kann auch eine Presseinheit, insbesondere eine Presskammer umfassen. Die Presseinheit, insbesondere die Presskammer kann eines oder mehrere Pressmitteln umfassen. Die Presseinheit kann das von der Aufnahmeeinheit aufgenommene Erntegut aufnehmen und zu einem Ballen pressen. Die Ballenpresse kann ausserdem eine Fördereinheit umfassen. Das von der Aufnahmeeinheit aufgenommene Erntegut kann mit der Fördereinheit, beispielsweise einem Rotor und/oder einem Unterboden mit Messern, geschnitten und in die Presseinheit geleitet werden. Die Fördereinheit kann als Teil der Aufnahmeeinheit ausgebildet sein oder der Aufnahmeeinheit nachgeordnet sein, insbesondere in Förderrichtung nachgeordnet sein. In der Presseinheit wird der Ballen, insbesondere der Rundballen oder der Quaderballen, geformt. Der fertig geformte Ballen kann im Anschluss in der Presseinheit mit einem Wickelmaterial, beispielsweise Netz, Folie oder Bindegarn, umwickelt werden. Der fertig geformte Ballen oder der fertig umwickelte Ballen, kann, indem eine Auswurfeinheit, beispielsweise eine Auswurfklappe oder ein Heckteil oder eine Heckklappe der Ballenpresse, in eine geöffnete Position bewegt wird und optional über eine Rampe, oder insbesondere einen Auswerfer, entladen oder ausgeworfen werden.

Die Ballenpresse kann Teil einer Kombination mit einem Zugfahrzeug sein. Die Ballenpresse kann mit dem Zugfahrzeug verbunden sein. Ausserdem kann das Zugfahrzeug die Ballenpresse ziehen und/oder mit einer Energie und/oder einer Kraft und/oder einem Drehmoment und/oder einer Drehzahl antreiben. Die Energie und/oder Kraft und/oder das Drehmoment und/oder die Drehzahl kann vom Zugfahrzeug an die Ballenpresse, insbesondere an die Presseinheit und/oder die Aufnahmeeinheit, übertragbar und/oder verteilbar sein.

Nachteil der bekannten Ballenpressen bzw. Kombinationen ist, dass das Aufnehmen des Ernteguts und/oder das Pressen des Ballens und/oder eine Überlastsituation, beispielsweise eine Verstopfung, der Presseinheit und/oder Aufnahmeeinheit nur schwer oder zu spät automatisch und/oder von einem Bediener erkennbar ist.

Der vorliegenden Erfindung liegt daher die Aufgabe zugrunde eine Kombination und ein Verfahren zum Betreiben einer Kombination und eine Ballenpresse vorzuschlagen, durch welche die vorgenannten Probleme überwunden werden. Insbesondere sollen eine Ballenpresse, eine Kombination und ein Verfahren zum Betreiben einer Kombination oder Ballenpresse vorgeschlagen werden, die es ermöglichen das Aufnehmen des Ernteguts und/oder das Pressen des Ballens und/oder eine Überlastsituation zu erkennen und/oder dem Bediener ermöglichen eine Überlastsituation zu vermeiden.

Diese Aufgabe wird durch eine Kombination mit den Merkmalen des Anspruchs 1 und eine Ballenpresse mit den Merkmalen des Anspruchs 12 und ein Verfahren mit den Merkmalen des Anspruchs 13 gelöst. Die abhängigen Ansprüche beziehen sich auf besonders vorteilhafte Ausführungsformen der Erfindung.

Erfindungsgemäss wird eine Zugfahrzeug-Ballenpressen-Kombination (Kombination) vorgeschlagen. Die Kombination umfasst ein Zugfahrzeug und eine Ballenpresse. Die Ballenpresse umfasst eine Aufnahmeeinheit, zum Aufnehmen eines Ernteguts vom Boden und zur Zufuhr des Ernteguts in eine Presseinheit, und die Presseinheit zum Aufnehmen des Ernteguts von der Aufnahmeeinheit und zum Pressen eines Ballens. Die Kombination umfasst weiter eine Steuereinheit und einen Sensor zur Erfassung eines Schallsignals, wobei die Steuereinheit mit dem Sensor verbunden ist. Die Steuereinheit ist konfiguriert, die Aufnahme des Ernteguts, insbesondere durch die Aufnahmeeinheit und/oder Presseinheit, und das Pressen des Ballens anhand eines Sensorsignals des Sensors zu charakterisieren.

Der Sensor kann also das Schallsignal, insbesondere ein in oder von der Ballenpresse, bevorzugt in oder von der Presseinheit und/oder der Aufnahmeeinheit, emittiertes Schallsignal ermitteln, bevorzugt erfassen und/oder detektieren. Der Pressvorgang kann insbesondere die Aufnahme des Ernteguts vom Boden durch die Aufnahmeeinheit und die Zufuhr des Ernteguts in die Presseinheit durch die Aufnahmeeinheit und/oder die Aufnahme des Ernteguts durch die Presseinheit und/oder das Pressen des Ballens durch die Presseinheit umfassen. Im Speziellen kann das Schallsignal mit dem Sensor während des Pressvorgangs, ermittelt, bevorzugt erfasst und/oder detektiert werden. Der Sensor kann konfiguriert sein ein Sensorsignal bereitzustellen, das eine Schallinformation des in der Ballenpresse emittierten Schallsignals, insbesondere des Pressvorgangs, umfasst. Das Schallsignal, insbesondere das emittierte Schallsignal, kann beispielsweise Schallanteile umfassen, die durch die

- Aufnahme des Ernteguts vom Boden durch die Aufnahmeeinheit, und
- Zufuhr des Ernteguts in die Presseinheit durch die Aufnahmeeinheit, und/oder

- Aufnahme des Ernteguts durch die Presseinheit und/oder
- des Pressens des Ballens durch die Presseinheit, insbesondere

Vibration der Ballenpresse und/oder der Presseinheit und/oder die Aufnahmeeinheit während dieser Arbeitsschritte verursacht werden. Mit anderen Worten, mit dem Sensor können eines oder mehrere Schallsignale, insbesondere in der Ballenpresse emittierte Schallsignale, in Form eines Sensorsignals erfassbar sein. Der Sensor ist mit der Steuereinheit signalverbunden und/oder wirkend gekoppelt und/oder signalübertragend und/oder datenleitend verbunden. Dadurch kann das Sensorsignal vom Sensor an die Steuereinheit gesendet werden und/oder von der Steuereinheit empfangen werden. Der Sensor kann das Schallsignal erfassen und in Form eines elektrischen Sensorsignals bereitstellen.

Die Ballenpresse kann eine Quaderballenpresse zum Bilden von Quaderballen oder eine Rundballenpresse zum Bilden von Rundballen aus Erntegut sein. Die Ballenpresse kann einen Ballenpressenrahmen umfassen. Ebenso kann die Ballenpresse in ein Zugfahrzeug integriert sein, also die Ballenpresse als selbstfahrende Ballenpresse ausgebildet sein. Die Ballenpresse kann durch Räder auf dem Erdboden abgestützt sein. Die Presseinheit, insbesondere die Presskammer kann eines oder mehrere Pressmitteln umfassen. Die Ballenpresse kann ausserdem eine Fördereinheit umfassen. Mit der Presseinheit kann der Ballen, insbesondere in einer Pressphase, geformt werden. Die Ballenpresse kann die Aufnahmeeinheit, insbesondere eine Pick-up, zum Aufnehmen von Erntegut vom Boden umfassen, und insbesondere zur Aufnahme des Ernteguts eines Schwads.

Die Ballenpresse kann eine Auswurfeinheit, beispielsweise eine Auswurfklappe oder ein Heckteil oder eine Heckklappe der Ballenpresse, umfassen. Der fertig geformte Ballen oder der fertig umwickelte Ballen, kann, wenn die Auswurfeinheit in der zweiten Position ist, also die Presseinheit geöffnet ist, entladen oder ausgeworfen werden. Die Auswurfeinheit kann schwenkbar an der Ballenpresse, insbesondere dem Ballenpressenrahmen oder einem Gehäuseteil, angeordnet, bevorzugt mit dieser oder diesem verbunden und/oder an diesem befestigt und/oder getragen sein, besonders bevorzugt schwenkbar gelagert sein. Die Ballenpresse kann mit einer größenveränderlichen Presseinheit, insbesondere Presskammer, oder als Ballenpresse mit variabler Presseinheit, insbesondere Presskammer ausgebildet sein. Die Ballenpresse mit größenveränderlicher Presseinheit kann eines oder mehrere Pressmittel umfassen, wobei das Pressmittel insbesondere als Riemen oder Gurt oder Kettenanordnung oder Band ausgebildet sein kann. Ebenso kann die Ballenpresse auch eine größenunveränderliche Presseinheit umfassen. Hierbei kann das oder können die Pressmittel als eine oder mehrere Pressrolle ausgebildet sein. Die Pressrollen können zueinander parallel verlaufend zum Pressen des Ernteguts angeordnet sein. Die Rotationsachsen der Pressrollen können bei geschlossener Auswurfeinheit auf einem Kreisbogen liegen und wenigstens eine der Pressrollen kann angetrieben sein. Die Anordnung der Pressrollen in der Presseinheit kann einer Zylinderform entsprechen, sodass die Pressrollen zylindrisch um den Rundballen angeordnet sind und eine zylindrische Umfangsfläche ausbilden. Die Presseinheit kann am Ballenpressenrahmen angeordnet, bevorzugt mit diesem verbunden und/oder an diesem befestigt sein. Die Aufnahmeeinheit zur Aufnahme oder zum Sammeln von Erntegut, das auf einem Feld, also Boden liegt, und/oder zum Befördern des Ernteguts in die Presseinheit kann ebenfalls am Ballenpressenrahmen angeordnet, bevorzugt mit diesem verbunden und/oder an diesem befestigt sein.

Die Steuereinheit kann insbesondere als eine integrierte und/oder gemeinsame Steuereinheit der Kombination ausgebildet sein. Die Steuereinheit kann auf, an oder in der Kombination, insbesondere dem Zugfahrzeug oder der Ballenpresse angeordnet sein. Alternativ oder zusätzlich kann die Steuereinheit als die Zugfahrzeugsteuereinheit und die Ballenpressensteuereinheit ausgebildet sein. Die Steuereinheit kann die Ballenpressensteuereinheit und die Zugfahrzeugsteuereinheit umfassen. Die Zugfahrzeugsteuereinheit kann mit der Ballenpressensteuereinheit verbunden sein, insbesondere signalverbunden und/oder wirkend gekoppelt und/oder signalübertragend und/oder datenleitend verbunden, und/oder ansteuerbar und/oder einstellbar und/oder verstellbar sein. In diesem Fall kann die Ballenpressensteuereinheit auf, an oder in der Ballenpresse und die Zugfahrzeugsteuereinheit auf, an oder in dem Zugfahrzeug angeordnet und/oder diesen zugeordnet sein. Die Steuereinheit kann auf oder an oder im Zugfahrzeug oder der Ballenpresse angeordnet sein.

Die Ballenpresse kann die Ballenpressensteuereinheit (anstatt der Steuereinheit) umfassen. Die Ballenpressensteuereinheit kann an oder auf oder in der Ballenpresse angeordnet sein. Die Ballenpressensteuereinheit kann mit der Aufnahmeeinheit und der Presseinheit signalverbunden und/oder wirkend gekoppelt und/oder signalübertragend und/oder datenleitend verbunden sein (anstatt mit der Steuereinheit). Das Zugfahrzeug kann die Zugfahrzeugsteuereinheit (anstatt der Steuereinheit) umfassen. Die Zugfahrzeugsteuereinheit kann an oder auf oder im Zugfahrzeug angeordnet sein, insbesondere befestigt oder befestigbar sein.

Unter mechanisch verbunden kann insbesondere antreibbar verbunden und/oder gekoppelt oder koppelbar bzw. mechanisch gekoppelt oder mechanisch koppelbar verstanden werden. Unter mechanisch verbunden, bevorzugt unter antreibbar verbunden und/oder gekoppelt oder koppelbar bzw. mechanisch gekoppelt oder mechanisch koppelbar kann im Speziellen also eine Verbindung von zwei Komponenten verstanden werden, die es ermöglicht, eine Energie und/oder Kraft und/oder ein Drehmoment und/oder eine Drehzahl von der einen Komponente auf die andere Komponente zu übertragen, insbesondere auf mechanischem Weg zu übertragen. Zwischen den zwei Komponenten können dabei weitere Komponenten oder Bauteile vorgesehen sein, die solch eine Energie- und/oder Kraft- und/oder Drehmomentübertragung und/oder Übertragung einer Drehzahl zwischen den zwei Komponenten ermöglichen.

Die Ballenpresse kann mit dem Zugfahrzeug mechanisch verbunden sein. Die Ballenpresse kann mit dem Zugfahrzeug gekoppelt sein, beispielsweise kann die Kombination das Zugfahrzeug und die mittels einer Deichsel vom Zugfahrzeug gezogenen Ballenpresse umfassen. Das Zugfahrzeug kann ein landwirtschaftliches Zugfahrzeug sein, insbesondere ein Traktor oder ein Schlepper. Das Zugfahrzeug kann in einer Fahrtrichtung vor der Ballenpresse angeordnet sein. Das Zugfahrzeug kann die Ballenpresse ziehen. Das Zugfahrzeug kann einen Antriebsstrang umfassen. Der Antriebsstrang kann einen Motor und/oder eine Getriebeeinheit, zum Antrieb oder Antreiben der Zugfahrzeug-Ballenpressen-Kombination umfassen. Das Zugfahrzeug kann ausserdem eines oder mehrere Hilfsaggregate umfassen, beispielsweise eine Pumpe und/oder einen Kühler etc.. Die Ballenpresse kann über die Eingangswelle und/oder über eine Zugvorrichtung, beispielsweise die Deichsel und/oder eine Kupplung, mit dem Zugfahrzeug mechanisch verbunden sein. Beispielsweise kann ein Zugfahrzeugrahmen des Zugfahrzeugs über die oder mit der Zugvorrichtung mit einem Ballenpressenrahmen der Ballenpresse verbunden sein. Das Zugfahrzeug kann den Zugfahrzeugrahmen umfassen. Der Antriebsstrang kann am Zugfahrzeugrahmen angeordnet und/oder befestigt sein, insbesondere auch vom Zugfahrzeugrahmen getragen sein. Das Zugfahrzeug kann das oder die Bodeneingriffsmittel umfassen. Die Bodeneingriffsmittel können das Zugfahrzeug auf dem Boden abstützen und/oder tragen. Der Zugfahrzeugrahmen des Zugfahrzeugs kann sich auf Vorder- und Hinterrädern abstützen. Die Bodeneingriffsmittel können Räder oder Raupen oder Ketten sein. Die Bodeneingriffsmittel, insbesondere die Vorderräder und Hinterräder, können lenkbar und/oder beweglich sein.

Die Kombination, insbesondere das Zugfahrzeug, kann eine Ein- und Ausgabeeinheit umfassen. Die Ballenpressensteuereinheit und/oder die Zugfahrzeugsteuereinheit können oder die Steuereinheit kann mit der Ein- und Ausgabeeinheit verbunden sein, insbesondere signalverbunden und/oder wirkend gekoppelt und/oder signalübertragend und/oder datenleitend verbunden sein, und/oder ansteuerbar und/oder einstellbar und/oder verstellbar sein. Die Ein- und Ausgabeeinheit kann in die Ballenpressensteuereinheit und/oder die Zugfahrzeugsteuereinheit oder die Steuereinheit oder umgekehrt integriert sein.

Ausserdem kann das Zugfahrzeug die Steuereinheit oder die Zugfahrzeugsteuereinheit umfassen.

Die Zugfahrzeugsteuereinheit oder die Steuereinheit kann/können mit einem Antriebsstrang, insbesondere dem Motor und/oder der Getriebeeinheit oder dem Getriebe, und/oder einer Zapfwelleneinheit signalverbunden und/oder wirkend gekoppelt und/oder signalübertragend und/oder datenleitend verbunden sein. Die Kombination, insbesondere das Zugfahrzeug, kann einen Geschwindigkeitssensor zur Erfassung einer Geschwindigkeit des Zugfahrzeugs umfassen.

Die Zugfahrzeugsteuereinheit oder die Steuereinheit kann/können konfiguriert sein, den Antriebsstrang, insbesondere den Motor und/oder die Getriebeeinheit oder das Getriebe, und/oder die Zapfwelleneinheit einzustellen und/oder zu verstellen und/oder anzusteuern, beispielsweise indem die Zugfahrzeugsteuereinheit oder die Steuereinheit Ventile und/oder Aktuatoren dieser Komponenten einstellen und/oder verstellen und/oder ansteuern. Die Zugfahrzeugsteuereinheit oder die Steuereinheit kann konfiguriert sein, eine Energie und/oder eine Kraft und/oder ein Drehmoment und/oder eine Drehzahl des Motors und/oder der Zapfwelleneinheit einzustellen und/oder zu verstellen und/oder anzusteuern.

Die Ballenpresse kann eine Wickeleinrichtung zum Umwickeln des Ballens, insbesondere des fertig geformten Ballens, mit einem Wickelmaterial umfassen. Das Wickelmaterial kann beispielsweise Netz, Folie oder Bindegarn sein. Der fertig geformte Ballen kann in oder während eines Wickelvorgangs, insbesondere in der Presseinheit, mit dem Wickelmaterial umwickelt werden.

Wesentlich für die Erfindung ist, dass die Steuereinheit konfiguriert ist, den Pressvorgang, insbesondere die Aufnahme des Ernteguts und/oder das das Pressen des Ernteguts, anhand eines oder mehrerer Sensorsignale des Sensors zu charakterisieren. Mit anderen Worten, die Kombination, insbesondere die Ballenpresse, kann mit der Steuereinheit derart betreibbar sein, dass diese mit oder anhand des Sensorsignals den Pressvorgang charakterisieren kann. Unter charakterisieren kann dabei verstanden werden, dass beispielsweise der Pressvorgang qualitativ und/oder quantitativ und/oder der Verlauf des Pressvorgangs anhand des Sensorsignals, insbesondere des Sensorsignals oder der Sensorsignale in Abhängigkeit von der Zeit, ermittelt, insbesondere erfasst und/oder verarbeitet werden kann. Dadurch kann vorteilhafterweise der Pressvorgang konstruktiv weniger aufwändig erkannt werden, da lediglich ein Sensor zu Erfassung des Schalls benötigt wird, um den Pressvorgang zu charakterisieren. Von Vorteil ist darüber hinaus, dass auf technisch einfache Art und Weise erkannt werden kann, ob und wie der Pressvorgang verlaufen ist.

In Ausgestaltung der Erfindung ist die Steuereinheit konfiguriert, eine Amplitude und/oder eine Frequenz des Sensorsignals zu ermitteln, und die Aufnahme des Ernteguts und/oder das Pressen des Ballens mit oder anhand der Amplitude und/oder der Frequenz zu charakterisieren. Dazu können Amplitude und/oder Frequenz des Schallsignals insbesondere anhand der Amplitude und/oder der Frequenz, des Sensorsignals ermittelt, insbesondere berechnet und/oder analysiert werden. Ebenso kann die Steuereinheit konfiguriert sein, die Amplitude und/oder die Frequenz des Sensorsignals mit einem oder mehreren Schwellwerten, insbesondere einem Amplituden- und/oder Frequenzschwellwert, zu vergleichen, und zu ermitteln, ob die Amplitude und/oder die Frequenz über oder unter dem oder den Schwellwerten liegen oder gleich dem oder den Schwellwerten sind. Im Speziellen kann eine erste Phase des Pressvorgangs vorliegen, wenn die Amplitude des Sensorsignals kleiner als der, oder insbesondere gleich dem, Amplitudenschwellwert ist und/oder die Frequenz des Sensorsignals kleiner als der, oder insbesondere gleich dem Frequenzschwellwert ist, also wenn gilt:

$$A < A_{schwell} \text{ und/oder } \vartheta < \vartheta_{schwell}$$

mit

$A$ = Amplitude des Sensorsignals
$A_{schwell}$ = Amplitudenschwellwert
$\vartheta$ = Frequenz des Sensorsignals
$\vartheta_{schwell}$ = Frequenzschwellwert

Ein Übergangspunkt von der Aufnahme des Ernteguts zum Pressen des Ernteguts kann vorliegen, wenn $A = A_{schwell}$ und/oder $\vartheta = \vartheta_{schwell}$ gilt. In diesem Fall kann die erste oder eine zweite Phase vorliegen.

Eine zweite Phase kann vorliegen, wenn die Amplitude des Sensorsignals grösser als der Amplitudenschwellwert ist und/oder die Frequenz des Sensorsignals grösser als der Frequenzschwellwert ist, also wenn gilt:

$$A > A_{schwell} \text{ und/oder } \vartheta > \vartheta_{schwell}$$

Die erste Phase kann die Aufnahme des Ernteguts vom Boden durch die Aufnahmeeinheit, und die Zufuhr des Ernteguts in die Presseinheit durch die Aufnahmeeinheit und/oder die Aufnahme des Ernteguts durch die Presseinheit umfassen. Die zweite Phase kann das Pressens des Ballens durch die Presseinheit umfassen. Es kann aber auch umgekehrt die erste Phase das Pressens des Ballens durch die Presseinheit umfassen und die zweite Phase die Aufnahme des Ernteguts vom Boden durch die Aufnahmeeinheit, und die Zufuhr des Ernteguts in die Presseinheit durch die Aufnahmeeinheit und/oder die Aufnahme des Ernteguts durch die Presseinheit umfassen. Vorteilhafterweise kann anhand der Amplitude und/oder der Frequenz des Sensorsignals der Pressvorgang charakterisiert und/oder ermittelt werden.

In Ausgestaltung der Erfindung ist das Schallsignal oder sind die Schallsignale in Abhängigkeit von der Zeit erfassbar. Die Steuereinheit kann konfiguriert sein, die Aufnahme des Ernteguts und/oder das Pressen des Ballens, also den Pressvorgang, anhand eines Sensorsignals oder mehrerer Sensorsignale des Sensors in Abhängigkeit von der Zeit zu charakterisieren. Im Weiteren kann die Steuereinheit konfiguriert sein eine oder mehrere Amplituden und/oder Frequenzen des Sensorsignals oder der Sensorsignale in Abhängigkeit von der Zeit zu ermitteln und/oder die Amplituden und/oder Frequenzen der Sensorsignale in Abhängigkeit von der Zeit mit dem oder den Schwellwerten, insbesondere dem Amplituden- und/oder Frequenzschwellwert zu vergleichen. Aufgrund der Erfassung des Schallsignals in Abhängigkeit von der Zeit kann mit dem Sensorsignal die Charakterisierung des Pressvorgangs, insbesondere des Verlaufs und/oder mit den Amplituden und/oder Frequenzen die Qualität und Quantität des Pressvorgangs beurteilt werden.

In Ausgestaltung der Erfindung ist die Steuereinheit konfiguriert, das Sensorsignal zu filtern und/oder zu bearbeiten. Dabei können die Amplitude(n) und/oder Frequenz(en) mit Filtern verändert und/oder bearbeitet werden. Im Speziellen kann das Sensorsignal, insbesondere können das oder die Sensorsignale in Abhängigkeit von der Zeit, mit einer FourierTransformation verarbeitet und/oder Hoch-Pass- und/oder Tiefpassfilter auf die Signale oder deren Fourier-Transformierte angewendet werden. Dadurch können die Amplitude(n) und/oder die Frequenz(en) auf einfach Art und Weise anhand des oder der Sensorsignale, insbesondere der Sensorsignale in Abhängigkeit von der Zeit, ermittelt werden.

In Ausgestaltung der Erfindung ist die Steuereinheit konfiguriert, ein Aufnahmesignal und/oder ein Presssignal in Abhängigkeit vom Sensorsignal, insbesondere von der Amplitude und/oder der Frequenz, zu generieren und/oder zu versenden. Die Steuereinheit kann konfiguriert sein, das Aufnahmesignal zu generieren und/oder zu versenden, wenn die Amplitude und/oder die Frequenz des Sensorsignal kleiner oder grösser als der Schwellwert oder die Schwellwerte ist, und/oder das Presssignal zu generieren und/oder zu versenden, wenn die Amplitude und/oder die Frequenz des Sensorsignal kleiner oder grösser als der Schwellwert oder die Schwellwerte ist. Im Speziellen kann die Steuereinheit konfiguriert sein, ein Aufnahmesignal zu generieren und zu versenden, wenn eine erste Phase des Pressvorgangs ermittelt wird, insbesondere wenn die Amplitude des Sensorsignals kleiner als der, oder insbesondere gleich dem, Amplitudenschwellwert und/oder die Frequenz des Sensorsignals kleiner als der, oder insbesondere gleich dem, Frequenzschwellwert ist, also wenn gilt:

$$A < A_{schwell} \text{ und/oder } \vartheta < \vartheta_{schwell}$$

Alternativ oder zusätzlich kann die Steuereinheit konfiguriert sein, ein Aufnahmesignal oder ein Presssignal zu generieren und zu versenden, wenn ein Übergangspunkt ermittelt wird, insbesondere wenn $A = A_{schwell}$ und/oder $\vartheta = \vartheta_{schwell}$ gilt. Alternativ oder zusätzlich kann die Steuereinheit konfiguriert sein, ein Presssignal zu generieren und zu versenden, wenn eine zweite Phase ermittelt wird, insbesondere wenn die Amplitude des Sensorsignals grösser als der Amplitudenschwellwert ist und/oder die Frequenz des Sensorsignals grösser als der Frequenzschwellwert ist, also wenn gilt:

$$A > A_{schwell} \text{ und/oder } \vartheta > \vartheta_{schwell}$$

Es kann aber auch umgekehrt die Steuereinheit konfiguriert sein, ein Presssignal zu generieren und zu versenden, wenn eine erste Phase des Pressvorgangs ermittelt wird, insbesondere wenn die Amplitude des Sensorsignals kleiner als der, oder insbesondere gleich dem, Amplitudenschwellwert und/oder die Frequenz des Sensorsignals kleiner als der, oder insbesondere gleich dem, Frequenzschwellwert ist, also wenn gilt:

$$A < A_{schwell} \text{ und/oder } \vartheta < \vartheta_{schwell}$$

Alternativ oder zusätzlich kann die Steuereinheit konfiguriert sein, das Aufnahmesignal oder ein Presssignal zu generieren und zu versenden, wenn ein Übergangspunkt ermittelt wird, insbesondere wenn $A = A_{schwell}$ und/oder $\vartheta = \vartheta_{schwell}$ gilt. Alternativ oder zusätzlich kann die Steuereinheit konfiguriert sein, ein Aufnahmesignal zu generieren und zu versenden, wenn eine zweite Phase ermittelt wird, insbesondere wenn die Amplitude des Sensorsignals grösser als der Amplitudenschwellwert ist und/oder die Frequenz des Sensorsignals grösser als der Frequenzschwellwert ist, also wenn gilt:

$$A > A_{schwell} \text{ und/oder } \vartheta > \vartheta_{schwell}$$

Die Steuereinheit kann das Presssignal und/oder das Aufnahmesignal an die Ein- und Ausgabeeinheit senden. Die Ein- und Ausgabeeinheit kann dem Bediener der Kombination mit dem Presssignal signalisieren und/oder informieren, dass die Ballenpresse, insbesondere die Presseinheit, am Pressen des Ballens ist. Die Ein- und Ausgabeeinheit kann dem Bediener der Kombination mit dem Aufnahmesignal signalisieren und/oder informieren, dass die Ballenpresse, insbesondere die Presseinheit, am Aufnehmen von Erntegut ist. Mit dem Presssignal und dem Aufnahmesignal kann dem Bediener der Kombination vorteilhafterweise der Status des Pressvorgangs angezeigt werden.

In Ausgestaltung der Erfindung ist die Steuereinheit konfiguriert, in Abhängigkeit vom Sensorsignal, insbesondere von der Amplitude und/oder der Frequenz, ein Fahrsignal und/oder ein Stellsignal zu generieren und/oder zu versenden. Die Steuereinheit kann konfiguriert sein, das Fahrsignal zu generieren und/oder zu versenden, wenn die Amplitude und/oder die Frequenz des Sensorsignal kleiner oder grösser als der Schwellwert oder die Schwellwerte ist, und/oder das Stellsignal zu generieren und/oder zu versenden, wenn die Amplitude und/oder die Frequenz des Sensorsignal kleiner oder grösser als der Schwellwert oder die Schwellwerte ist. Im Speziellen kann die Steuereinheit konfiguriert sein, das Fahrsignal und/oder das Stellsignal zu generieren und zu versenden, wenn eine erste Phase des Pressvorgangs ermittelt wird, insbesondere wenn die Amplitude des Sensorsignals kleiner als der, oder insbesondere gleich dem, Amplitudenschwellwert und/oder die Frequenz des Sensorsignals kleiner als der, oder insbesondere gleich dem, Frequenzschwellwert ist, also wenn gilt:

$$A < A_{schwell} \text{ und/oder } \vartheta < \vartheta_{schwell}$$

Alternativ oder zusätzlich kann die Steuereinheit konfiguriert sein, das Fahrsignal und/oder das Stellsignal zu generieren und zu versenden, wenn ein Übergangspunkt ermittelt wird, insbesondere wenn $A = A_{schwell}$ und/oder $\vartheta = \vartheta_{schwell}$ gilt.

Es kann aber auch umgekehrt die Steuereinheit konfiguriert sein, das Fahrsignal und/oder das Stellsignal zu generieren und zu versenden, wenn eine zweite Phase ermittelt wird, insbesondere wenn die Amplitude des Sensorsignals grösser als der Amplitudenschwellwert ist und/oder die Frequenz des Sensorsignals grösser als der Frequenzschwellwert ist, also wenn gilt:

$$A > A_{schwell} \text{ und/oder } \vartheta > \vartheta_{schwell}$$

Alternativ oder zusätzlich kann die Steuereinheit konfiguriert sein, das Fahrsignal oder das Stellsignal zu generieren und zu versenden, wenn ein Übergangspunkt ermittelt wird, insbesondere wenn $A = A_{schwell}$ und/oder $\vartheta = \vartheta_{schwell}$ gilt. Die Steuereinheit kann das Fahrsignal an die Ein- und Ausgabeeinheit senden. Die Ein- und Ausgabeeinheit kann dem Bediener der Kombination mit dem Fahrsignal signalisieren und/oder informieren, die Geschwindigkeit der Kombination oder des Zugfahrzeugs, insbesondere eine Drehzahl oder ein Drehmoment oder eine Energie des Antriebsstrangs, einzustellen und/oder zu verstellen. Die Steuereinheit kann das Stellsignal an die Ein- und Ausgabeeinheit senden. Die Ein- und Ausgabeeinheit kann dem Bediener der Kombination mit dem Stellsignal signalisieren und/oder informieren, die Zapfwelleneinheit, insbesondere eine Drehzahl oder ein Drehmoment oder eine Energie der Zapfwelleneinheit einzustellen und/oder zu verstellen.

In Ausgestaltung der Erfindung umfasst das Zugfahrzeug den Antriebsstrang zum Antrieb des Zugfahrzeugs und/oder die Zapfwelleneinheit. Die Steuereinheit oder die Zugfahrzeugsteuereinheit ist mit dem Antriebsstrang und/oder der Zapfwelleneinheit verbunden. Ausserdem ist die Steuereinheit oder die Zugfahrzeugsteuereinheit konfiguriert, mit dem Fahrsignal den Antriebsstrang, insbesondere eine Geschwindigkeit der Kombination, und/oder mit dem Stellsignal die Zapfwelleneinheit einzustellen und/oder zu verstellen.

Der Antriebsstrang kann den Motor und/oder die Getriebeeinheit oder das Getriebe umfassen. Der Motor und/oder die Getriebeeinheit oder das Getriebe können mechanisch verbunden sein. Das Zugfahrzeug kann die Zapfwelleneinheit, insbesondere ein Zapfwellengetriebe und/oder eine Zapfwelle bzw. Ausgangswelle umfassen. Die Zapfwelleneinheit kann ein Zapfwellengetriebe und/oder die Zapfwelle bzw. Ausgangswelle umfassen. Der Antriebsstrang, insbesondere der Motor und/oder die Getriebeeinheit oder das Getriebe kann die Zapfwelleneinheit, insbesondere das Zapfwellengetriebe und/oder die Zapfwelle antreiben. Der Antriebsstrang kann mit dem Zapfwellengetriebe und/oder der Zapfwelle mechanisch verbunden sein. Ausserdem kann die Zapfwelleneinheit, beispielsweise mit einer Antriebswelle, mit der Ballenpresse zum Antreiben der Presseinheit und der Aufnahmeeinheit mechanisch verbunden sein. Alternativ kann die Zugfahrzeugsteuereinheit die Aufgaben der Steuereinheit übernehmen.

Die Steuereinheit oder die Zugfahrzeugsteuereinheit kann mit dem Antriebsstrang, insbesondere dem Motor und/oder der Getriebeeinheit oder dem Getriebe bevorzugt signalverbunden und/oder wirkend gekoppelt und/oder signalübertragend und/oder datenleitend verbunden sein. Dazu kann die Steuereinheit beispielsweise mit Ventilen oder Aktuatoren des Motors oder der Getriebeeinheit oder dem Getriebe bevorzugt signalverbunden und/oder wirkend gekoppelt und/oder signalübertragend und/oder datenleitend verbunden sein. Die Geschwindigkeit der Kombination bzw. des Zugfahrzeugs kann mit dem Fahrsignal geändert werden, indem eine Energie und/oder eine Kraft und/oder ein Drehmoment und/oder eine Drehzahl des Antriebsstrangs, insbesondere des Motors, erhöht oder gesenkt werden. Zusätzlich oder alternativ kann ein Gang der Getriebeeinheit oder des Getriebes, insbesondere eine Übersetzung, eingestellt und/oder verstellt werden. Die Anpassung der Geschwindigkeit kann automatisch oder durch einen Bediener der Kombination erfolgen. Der Motor kann beispielsweise eine Verbrennungskraftmaschine oder ein Elektromotor sein. Die Getriebeeinheit kann das Getriebe umfassen.

Die Steuereinheit oder die Zugfahrzeugsteuereinheit kann konfiguriert sein, den Motor und/oder die Getriebeeinheit oder das Getriebe mit dem oder in Abhängigkeit vom Fahrsignal einzustellen und/oder zu verstellen, insbesondere zu erhöhen oder zu verringern. Die Steuereinheit oder die Zugfahrzeugsteuereinheit kann konfiguriert sein, die Energie und/oder das Drehmoment und/oder die Kraft und/oder die Drehzahl des Antriebsstrang, insbesondere des Motors und/oder die Getriebeeinheit oder das Getriebe, mit dem oder in Abhängigkeit vom Fahrsignal einzustellen und/oder zu verstellen, insbesondere zu erhöhen oder zu verringern.

Im Speziellen kann die Steuereinheit oder die Zugfahrzeugsteuereinheit konfiguriert sein, die Energie und/oder das Drehmoment und/oder die Kraft und/oder die Drehzahl des Antriebsstrang, insbesondere des Motors und/oder der Getriebeeinheit oder des Getriebes, mit dem oder in Abhängigkeit vom Fahrsignal zu verringern oder verkleinern, wenn eine erste Phase ermittelt wird, insbesondere wenn die Amplitude des Sensorsignals kleiner als der, oder insbesondere gleich dem, Amplitudenschwellwert und/oder die Frequenz des Sensorsignals kleiner als der, oder insbesondere gleich dem, Frequenzschwellwert ist, also wenn gilt:

$$A < A_{schwell} \text{ und/oder } \vartheta < \vartheta_{schwell}$$

Alternativ oder zusätzlich kann die Steuereinheit oder die Zugfahrzeugsteuereinheit konfiguriert sein, die Energie und/oder das Drehmoment und/oder die Kraft und/oder die Drehzahl des Antriebsstrang, insbesondere des Motors und/oder der Getriebeeinheit oder des Getriebes, mit dem oder in Abhängigkeit vom Fahrsignal zu verringern oder verkleinern, wenn ein Übergangspunkt ermittelt wird, insbesondere wenn $A = A_{schwell}$ und/oder $\vartheta = \vartheta_{schwell}$ gilt. Alternativ kann die Steuereinheit oder die Zugfahrzeugsteuereinheit konfiguriert sein, die Energie und/oder das Drehmoment und/oder die Kraft und/oder die Drehzahl des Antriebsstrang, insbesondere des Motors und/oder der Getriebeeinheit oder des Getriebes, mit dem oder in Abhängigkeit vom Fahrsignal zu erhöhen, wenn ein Übergangspunkt ermittelt wird, insbesondere wenn $A = A_{schwell}$ und/oder $\vartheta = \vartheta_{schwell}$ gilt. Alternativ oder zusätzlich kann die Steuereinheit konfiguriert sein, die Energie und/oder das Drehmoment und/oder die Kraft und/oder die Drehzahl des Antriebsstrang, insbesondere des Motors und/oder der Getriebeeinheit oder des Getriebes, mit dem oder in Abhängigkeit vom Fahrsignal zu erhöhen, wenn eine zweite Phase ermittelt wird, insbesondere wenn die Amplitude des Sensorsignals grösser als der Amplitudenschwellwert ist und/oder die Frequenz des Sensorsignals grösser als der Frequenzschwellwert ist, also wenn gilt:

$$A > A_{schwell} \text{ und/oder } \vartheta > \vartheta_{schwell}$$

Es kann aber auch umgekehrt die Steuereinheit konfiguriert sein, die Energie und/oder das Drehmoment und/oder die Kraft und/oder die Drehzahl des Antriebsstrang, insbesondere des Motors und/oder der Getriebeeinheit oder des Getriebes, zu erhöhen, wenn eine erste Phase des Pressvorgangs ermittelt wird, insbesondere wenn die Amplitude des Sensorsignals kleiner als der, oder insbesondere gleich dem, Amplitudenschwellwert und/oder die Frequenz des Sensorsignals kleiner als der, oder insbesondere gleich dem, Frequenzschwellwert ist, also wenn gilt:

$$A < A_{schwell} \text{ und/oder } \vartheta < \vartheta_{schwell}$$

Alternativ oder zusätzlich kann die Steuereinheit konfiguriert sein, die Energie und/oder das Drehmoment und/oder die Kraft und/oder die Drehzahl des Antriebsstrang, insbesondere des Motors und/oder der Getriebeeinheit oder des Getriebes, zu erhöhen, wenn ein Übergangspunkt ermittelt wird, insbesondere wenn $A = A_{schwell}$ und/oder $\vartheta = \vartheta_{schwell}$ gilt Alternativ kann die Steuereinheit konfiguriert sein, die Energie und/oder das Drehmoment und/oder die Kraft und/oder die Drehzahl des Antriebsstrang, insbesondere des Motors und/oder der Getriebeeinheit oder des Getriebes, zu verringern oder zu verkleinern, wenn ein Übergangspunkt ermittelt wird, insbesondere wenn $A = A_{schwell}$ und/oder $\vartheta = \vartheta_{schwell}$ gilt. Alternativ oder zusätzlich kann die Steuereinheit konfiguriert sein, die Energie und/oder das Drehmoment und/oder die Kraft und/oder die Drehzahl des Antriebsstrang, insbesondere des Motors und/oder der Getriebeeinheit oder des Getriebes, zu verringern oder zu verkleinern, wenn eine zweite Phase ermittelt wird, insbesondere wenn die Amplitude des Sensorsignals grösser als der Amplitudenschwellwert ist und/oder die Frequenz des Sensorsignals grösser als der Frequenzschwellwert ist, also wenn gilt:

$$A > A_{schwell} \text{ und/oder } \vartheta > \vartheta_{schwell}$$

Mit anderen Worten, die Steuereinheit oder die Zugfahrzeugsteuereinheit kann konfiguriert sein, den Antriebsstrang mit dem Fahrsignal anzusteuern und/oder einzustellen und/oder zu verstellen, und die Geschwindigkeit der Kombination, insbesondere das Zugfahrzeug, von einer ersten Geschwindigkeit auf eine zweite Geschwindigkeit einzustellen und/oder zu verstellen.

Die Steuereinheit oder die Zugfahrzeugsteuereinheit kann konfiguriert sein die Zapfwelleneinheit, insbesondere einen Elektromotor des Zapfwelleneinheit, mit dem oder in Abhängigkeit vom Stellsignal einzustellen und/oder zu verstellen, insbesondere eine Drehzahl oder ein Drehmoment oder eine Energie zu erhöhen oder zu verringern. Die Steuereinheit oder die Zugfahrzeugsteuereinheit kann konfiguriert sein, die Energie und/oder das Drehmoment und/oder die Kraft und/oder die Drehzahl der Zapfwelleneinheit mit dem oder in Abhängigkeit vom Fahrsignal einzustellen und/oder zu verstellen, insbesondere zu erhöhen oder zu verringern.

Im Speziellen kann die Steuereinheit oder die Zugfahrzeugsteuereinheit konfiguriert sein, die Energie und/oder das Drehmoment und/oder die Kraft und/oder die Drehzahl der Zapfwelleneinheit mit dem oder in Abhängigkeit vom Stellsignal zu verringern oder verkleinern, wenn eine erste Phase des Pressvorgangs ermittelt wird, insbesondere wenn die Amplitude des Sensorsignals kleiner als der, oder insbesondere gleich dem, Amplitudenschwellwert und/oder die Frequenz des Sensorsignals kleiner als der, oder insbesondere gleich dem, Frequenzschwellwert ist, also wenn gilt:

$$A < A_{schwell} \text{ und/oder } \vartheta < \vartheta_{schwell}$$

Alternativ oder zusätzlich kann die Steuereinheit oder die Zugfahrzeugsteuereinheit konfiguriert sein, die Energie und/oder das Drehmoment und/oder die Kraft und/oder die Drehzahl der Zapfwelleneinheit mit dem oder in Abhängigkeit vom Stellsignal zu verringern oder verkleinern, wenn ein Übergangspunkt ermittelt wird, insbesondere wenn $A = A_{schwell}$ und/oder $\vartheta = \vartheta_{schwell}$ gilt. Alternativ kann die Steuereinheit oder die Zugfahrzeugsteuereinheit konfiguriert sein, die Energie und/oder das Drehmoment und/oder die Kraft und/oder die Drehzahl der Zapfwelleneinheit mit dem oder in Abhängigkeit vom Stellsignal zu erhöhen, wenn ein Übergangspunkt ermittelt wird, insbesondere wenn $A = A_{schwell}$ und/oder $\vartheta = \vartheta_{schwell}$ gilt. Alternativ oder zusätzlich kann die Steuereinheit konfiguriert sein, die Energie und/oder das Drehmoment und/oder die Kraft und/oder die Drehzahl der Zapfwelleneinheit mit dem oder in Abhängigkeit vom Stellsignal zu erhöhen, wenn eine zweite Phase ermittelt wird, insbesondere wenn die Amplitude des Sensorsignals grösser als der Amplitudenschwellwert ist und/oder die Frequenz des Sensorsignals grösser als der Frequenzschwellwert ist, also wenn gilt:

$$A > A_{schwell} \text{ und/oder } \vartheta > \vartheta_{schwell}$$

Es kann aber auch umgekehrt die Steuereinheit konfiguriert sein, die Energie und/oder das Drehmoment und/oder die Kraft und/oder die Drehzahl der Zapfwelleneinheit mit dem oder in Abhängigkeit vom Stellsignal zu erhöhen, wenn eine erste Phase des Pressvorgangs ermittelt wird, insbesondere wenn die Amplitude des Sensorsignals kleiner als der, oder insbesondere gleich dem, Amplitudenschwellwert und/oder die Frequenz des Sensorsignals kleiner als der, oder insbesondere gleich dem, Frequenzschwellwert ist, also wenn gilt:

$$A < A_{schwell} \text{ und/oder } \vartheta < \vartheta_{schwell}$$

Alternativ oder zusätzlich kann die Steuereinheit konfiguriert sein, die Energie und/oder das Drehmoment und/oder die Kraft und/oder die Drehzahl der Zapfwelleneinheit mit dem oder in Abhängigkeit vom Stellsignal zu erhöhen, wenn ein Übergangspunkt ermittelt wird, insbesondere wenn $A = A_{schwell}$ und/oder $\vartheta = \vartheta_{schwell}$ gilt. Alternativ kann die Steuereinheit konfiguriert sein, die Energie und/oder das Drehmoment und/oder die Kraft und/oder die Drehzahl der Zapfwelleneinheit mit dem oder in Abhängigkeit vom Stellsignal zu verringern oder zu verkleinern, wenn ein Übergangspunkt ermittelt wird, insbesondere wenn $A = A_{schwell}$ und/oder $\vartheta = \vartheta_{schwell}$ gilt.

Alternativ oder zusätzlich kann die Steuereinheit konfiguriert sein, die Energie und/oder das Drehmoment und/oder die Kraft und/oder die Drehzahl der Zapfwelleneinheit mit dem oder in Abhängigkeit vom Stellsignal zu verringern oder zu verkleinern, wenn eine zweite Phase ermittelt wird, insbesondere wenn die Amplitude des Sensorsignals grösser als der Amplitudenschwellwert ist und/oder die Frequenz des Sensorsignals grösser als der Frequenzschwellwert ist, also wenn gilt:

$$A > A_{schwell} \text{ und/oder } \vartheta > \vartheta_{schwell}$$

Mit anderen Worten, die Steuereinheit oder die Zugfahrzeugsteuereinheit kann konfiguriert sein, die Zapfwelleneinheit mit dem Stellsignal anzusteuern und/oder einzustellen und/oder zu verstellen, und die Drehzahl und/oder die Energie und/oder das Drehmoment der Zapfwelleneinheit, von einer ersten Drehzahl und/oder Energie und/oder einem ersten Drehmoment der Zapfwelleneinheit auf eine zweite Drehzahl und/oder Energie und/oder ein erstes Drehmoment der Zapfwelleneinheit einzustellen und/oder zu verstellen. Vorteilhafterweise kann dadurch in Abhängigkeit vom Schallsignal die Zufuhr von Erntegut über die Geschwindigkeit der Kombination oder die Drehzahl und/oder die Energie und/oder das Drehmoment der Zapfwelleneinheit eingestellt werden.

In Ausgestaltung der Erfindung ist der Sensor oder die Sensoren an der Presseinheit und/oder an der Aufnahmeeinheit und/oder an einem Ballenpressenrahmen der Ballenpresse angeordnet, bevorzugt mit diesen mechanisch verbunden oder an diesen befestigt. Der Sensor kann insbesondere kontaktlos, also ohne die Presseinheit oder die Aufnahmeeinheit oder den Ballenpressenrahmen zu berühren, mit diesen verbunden oder an diesen befestigt sein. Der Sensor kann ein Schallsensor, insbesondere ein Mikrophon oder ein Ultraschallsensor sein. Dadurch kann das in der Ballenpresse, insbesondere der Presseinheit, emittierte Schallsignal auf einfach Art und Weise erfasst werden.

In Ausgestaltung der Erfindung ist die Steuereinheit oder die Zugfahrzeugsteuereinheit, konfiguriert, die Aufnahme des Ernteguts und/oder das Pressen des Ballens, anhand eines repräsentierenden Modells in Abhängigkeit vom Sensorsignals des Sensors zu charakterisieren, insbesondere in Abhängigkeit vom Sensorsignal in Abhängigkeit von der Zeit zu charakterisieren. Das Modell kann dabei eine softwaremäßige Darstellung oder Simulation oder eine Funktion, insbesondere ein Verlauf des Schallsignals, der Aufnahme des Ernteguts und/oder des Pressens des Ballens sein. Mittels Ausgleichungsrechnung können die Parameter der Funktion bestimmt oder geschätzt werden. Im Weiteren kann die Steuereinheit konfiguriert sein, die Amplitude(n) und/oder die Frequenz(en) anhand des repräsentierenden Modells zu ermitteln, insbesondere zu berechnen. Die Steuereinheit kann weiter konfiguriert sein, die Amplitude(n) und/oder die Frequenz(en) mit einem oder dem Schwellwert zu vergleichen. Die Steuereinheit kann außerdem konfiguriert sein, das Modell mit den vom Sensor erfassten Schallsignalen, insbesondere in Abhängigkeit von der Zeit, des Wickelvorgangs anzupassen und/oder zu verbessern.

Die Erfindung betrifft weiter eine Ballenpresse für eine Zugfahrzeug-Ballenpressen-Kombination, insbesondere nach einem der Ansprüche 1 bis 11.

Die Ballenpresse kann umfassen:

- eine Aufnahmeeinheit zum Aufnehmen eines Ernteguts vom Boden und zur Zufuhr des Ernteguts in eine Presseinheit, und
- die Presseinheit zum Aufnehmen des Ernteguts, insbesondere von der Aufnahmeeinheit, und zum Pressen oder Formen eines Ballens, und
- eine Steuereinheit oder eine Ballenpressensteuereinheit und einen Sensor zur Erfassung eines Schallsignals, und
- Die Steuereinheit oder die Ballenpressensteuereinheit können mit der Aufnahmeeinheit und der Presseinheit verbunden sein, bevorzugt signalverbunden und/oder wirkend gekoppelt und/oder signalübertragend und/oder datenleitend verbunden ist. Die Aufnahmeeinheit und der Presseinheit können mit der Steuereinheit oder der Ballenpressensteuereinheit ansteuerbar und/oder einstellbar und/oder verstellbar sein.

Die Steuereinheit oder die Ballenpressensteuereinheit können konfiguriert sein, die Aufnahme des Ernteguts der Presseinheit und das Pressen des Ballens der Presseinheit anhand eines Sensorsignals des Sensors zu charakterisieren.

Die Erfindung betrifft weiter ein Verfahren zum Betreiben einer Kombination, insbesondere einer Kombination nach mindestens einem der Ansprüche 1 bis 11, oder einer Ballenpresse, insbesondere einer Ballenpresse nach Anspruch 12.

Das Verfahren kann die Schritte:

- Aufnehmen des Ernteguts mit der oder durch die Presseinheit von der Aufnahmeeinheit und Pressen eines Ballens in der Presseinheit,
- Erfassung eines Schallsignals in der Ballenpresse, insbesondere der Presseinheit, durch einen Sensor,
- Charakterisieren der Aufnahme des Ernteguts mit der oder durch die Presseinheit und Pressen eines Ballens in der Presseinheit durch eine Steuereinheit, mit einem Sensorsignal des Sensors,
- Dabei kann die Aufnahme des Ernteguts und das Pressen des Ballens mit dem Sensorsignal des Sensors charakterisiert werden.

Mit anderen Worten, Bereitstellen eines Sensorsignals, das ein erfasstes Schallsignal in der Ballenpresse, insbesondere der Presseinheit, und/oder eine Schallsignalinformation, in der Ballenpresse, umfasst, durch einen Sensor und Bereitstellen eines Sensorsignals durch den Sensor sowie Charakterisieren der Aufnahme des Ernteguts und des Pressens eines Ballens, insbesondere durch eine Steuereinheit, mit dem Sensorsignal des Sensors. Das Verfahren weist alle Vorteile und Funktionen der oben genannten erfindungsgemässen Kombination auf. Ebenso kann das Verfahren umfassen, dass eine Amplitude und/oder eine Frequenz des Sensorsignals ermittelt wird, und die Aufnahme und das Pressen mit der Amplitude und/oder eine Frequenz des Sensorsignals charakterisiert wird. Ebenso kann die Amplitude und/oder Frequenz des Sensorsignals mit einem Schwellwert verglichen werden.

Der oder die Sensoren und/oder die Ein- und Ausgabeeinheit und/oder alle weiteren Sensoren und/oder die Zapfwelleneinheit und/oder der Antriebsstrang, insbesondere der Motor und/oder die Getriebeeinheit und/oder das Getriebe, können mit der Steuereinheit betreibbar, bevorzugt ansteuerbar und/oder steuerbar und/oder regelbar, besonders bevorzugt einstellbar und/oder verstellbar sein. Die Steuereinheit kann der Ballenpresse zugeordnet sein. Im Speziellen kann, wenn die Ballenpresse Teil einer Kombination aus einem Zugfahrzeug, beispielsweise ein Traktor oder Schlepper ist, die Steuereinheit dem Zugfahrzeug oder der Ballenpresse und dem Zugfahrzeug gemeinsam zugeordnet und/oder an oder in diesen angeordnet sein. Die Kombination, insbesondere das Zugfahrzeug oder die Ballenpresse oder beide gemeinsam, kann bzw. können die Steuereinheit umfassen. Ebenso kann die Steuereinheit als Zugfahrzeugsteuereinheit und/oder Ballenpressensteuereinheit ausgebildet sein.

Die Steuereinheit kann als ein elektronisches Modul, ein eingebettetes System, eine Recheneinheit, ein Computer, als ein Modul zum Steuern und/oder Regeln der Ballenpresse, bevorzugt der Kombination, also des Zugfahrzeugs und/oder der Ballenpresse, ausgebildet sein. Die Steuereinheit kann einen Prozessor, einen Speicher und/oder alle Software, Hardware, Algorithmen, Anschlüsse, insbesondere auch Sensoren, umfassen, die für die Steuerung und/oder Regelung der Ballenpresse erforderlich sind. Das Verfahren kann als Programm oder Algorithmus ausgebildet sein, welches auf und/oder mit der Steuereinheit ausführbar ist. Die Steuereinheit kann jedes Gerät umfassen, das Daten von verschiedenen Sensoren analysieren, Daten vergleichen und die erforderlichen Entscheidungen treffen kann, um den Betrieb der Ballenpresse und die erforderlichen Aufgaben zur Steuerung und/oder Regelung des Betriebs der Ballenpresse zu steuern und/oder zu regeln und/oder auszuführen.

Die Steuereinheit kann mit den Bauteilen der Kombination, also insbesondere dem Sensor und/oder der Ein- und Ausgabeeinheit und/oder allen weiteren Sensoren und/oder der Zapfwelleneinheit und/oder der Antriebsstrang, insbesondere der Motor und/oder die Getriebeeinheit und/oder das Getriebe, verbunden sein, bevorzugt signalverbunden und/oder signalübertragend und/oder datenleitend verbunden sein. Unter einer signalverbundenen und/oder signalübertragenden und/oder datenleitenden Verbindung kann dabei unter anderem verstanden werden, dass ein Austausch von Signalen und/oder Daten zwischen den verbundenen Bauteilen stattfindet. Signale und/oder Daten können beispielsweise von der Steuereinheit empfangen und versendet werden und/oder verarbeitet und/oder bearbeitet werden. Mit anderen Worten, die Steuereinheit ist konfiguriert, Signale und/oder Daten vom Sensor und/oder der Ein- und Ausgabeeinheit und/oder allen weiteren Sensoren und/oder die Zapfwelleneinheit und/oder der Antriebsstrang, insbesondere der Motor und/oder die Getriebeeinheit und/oder das Getriebe, zu empfangen und an diese zu versenden. Ebenso kann die Steuereinheit konfiguriert sein Daten und Signale zu verarbeiten und/oder zu bearbeiten.

Die Verbindung zwischen der Steuereinheit und den Bauteilen der Ballenpresse, insbesondere der Kombination, kann kabelgebunden, insbesondere also mit Kabel, und/oder kabellos, also per Funk, beispielsweise mit Bluetooth oder WLAN realisiert sein. Der Kommunikationsbus kann beispielsweise Isobus, CAN-Bus oder ähnliches sein kann. Die Steuereinheit kann unmittelbar mit der in einer Kabine des Zugfahrzeugs angeordneten Ein- und Ausgabeeinheit Verbindung stehen, durch welche von einer Bedienperson eingegebene Daten an die Steuereinheit übertragen oder von dieser empfangen und ausgegeben werden können. Denkbar ist aber auch, dass die Steuereinheit mittelbar durch eine übergeordnete Steuereinheit mit der Ein- und Ausgabeeinheit verbunden ist. Die Steuereinheit kann in die Ein- und Ausgabeeinheit integriert sein, oder umgekehrt.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:

Fig. 1     eine schematische Darstellung einer erfindungsgemässen Ballenpresse, und

Fig. 2     eine schematische Darstellung eines ersten Ausführungsbeispiels der erfindungsgemässen Kombination, und

Fig. 3     ein schematisches Flussdiagramm des erfindungsgemässen Verfahrens, und

Fig. 4     eine schematische Darstellung eines Verlaufs der Amplitude des Sensorsignals während der Aufnahme des Ernteguts und dem Pressen des Ballens, und

Fig. 5     eine schematische Darstellung eines Verlaufs der Frequenz des Sensorsignals während der Aufnahme des Ernteguts und dem Pressen des Ballens.

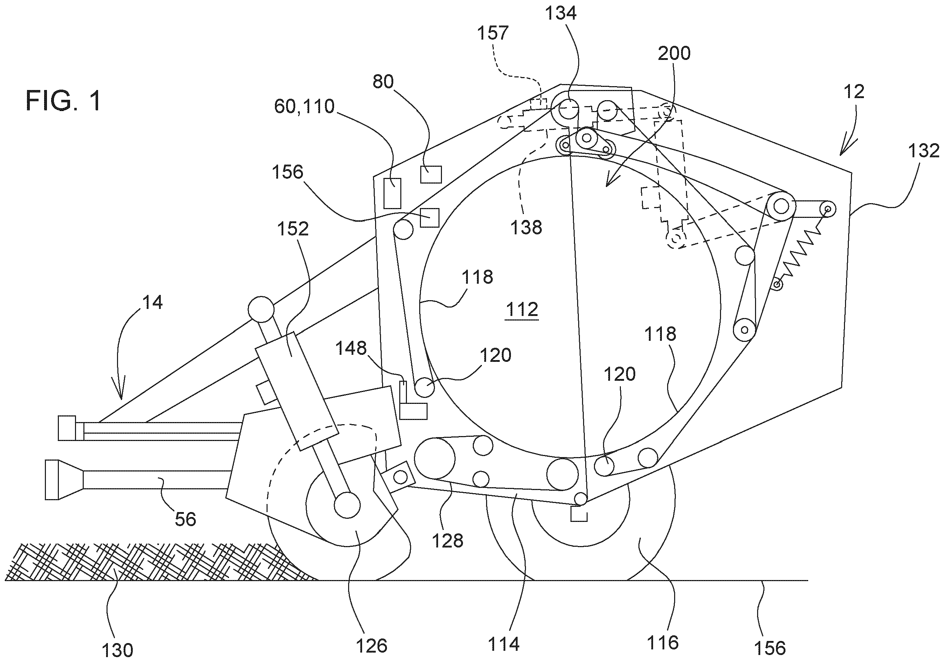

Figur 1 zeigt eine schematische Darstellung einer erfindungsgemässen Ballenpresse 12. Die Ballenpresse 12 umfasst eine Aufnahmeeinheit 126 zur Aufnahme von Erntegut und eine Presseinheit 112, um das aufgenommene Erntegut zu einem Ballen 200 zu formen bzw. zu pressen. Die Ballenpresse 12 umfasst eine Steuereinheit 60. Alternativ kann die Ballenpresse 12 eine Ballenpressensteuereinheit 110 umfassen. Die Ballenpresse 12 kann einen Ballenpressenrahmen 114 umfassen. Der Ballenpressenrahmen 114 kann auf Rädern 116 getragen sein. Die Presseinheit 112 kann am oder auf dem Ballenpressenrahmen 114 angeordnet, bevorzugt mit diesem verbunden und/oder an diesem befestigt und/oder getragen sein.

Die Ballenpresse 12 ist mit einer grössenveränderlichen Presseinheit 112 ausgebildet. Das Pressmittel 118 ist als Band oder Riemen ausgebildet. Das Pressmittel 118 umgibt die Presseinheit 112 und ist mit Rollen 120 geführt. Die Ballenpresse 12 kann aber auch mit einer grössenunveränderlichen Presseinheit 112 ausgebildet sein. Hierbei kann das Pressmittel 118 als eine oder mehrere Pressrollen ausgebildet sein, insbesondere eine Vielzahl zueinander parallel verlaufender Pressrollen zum Pressen des Ernteguts.

Die Aufnahmeeinheit 126, insbesondere in Form einer Pick-up, ist an der Ballenpresse 12 angeordnet und/oder mit dieser verbunden, insbesondere unterhalb der Vorderkante der Ballenpresse 12. Die Aufnahmeeinheit 126 kann sich um eine Querachse bewegenden oder drehenden Zinken umfassen. Der Aufnahmeeinheit 126 kann in einer Erntegutflussrichtung eine Fördereinheit, vorliegend ein Förderband 128, der Ballenpresse 12 folgen. Das Förderband 128 könnte auch durch einen Rotor (nicht gezeigt) ersetzt werden, oder ein Rotor könnte in Gutflussrichtung zwischen der Aufnahmeeinheit 126 und dem Förderband 128 eingefügt werden. Anstelle der Aufnahmeeinheit 126, insbesondere der Pick-up, könnten auch andere geeignete Erntegutaufnahmemittel wie Mäh- und Fördereinheiten verwendet werden.

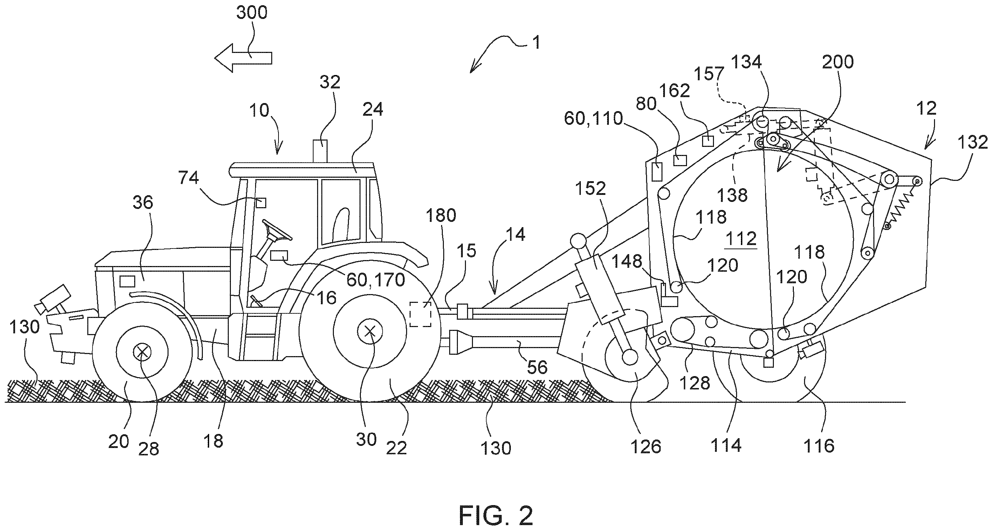

Die Aufnahmeeinheit 126 sammelt Erntegut, das insbesondere in einer Schwade 130 beispielsweise aus Gras, Heu oder Stroh, auf dem Feld liegt, und führt es der Presseinheit 112 zu. Die Pressmittel 118, insbesondere eines oder mehrere Bänder oder Gurte, können während eines Ballenpressvorgangs in ihrer Längsrichtung in Bewegung versetzt werden, indem eine oder mehrere der Rollen 120 rotierend angetrieben werden. Das in die Presseinheit 112 eingeführte Erntegut dreht sich somit auch während des Pressens. Während des Pressenvorgangs nimmt die Grösse, insbesondere der Durchmesser, der grössenveränderlichen Presseinheit 112 mit der Zeit zu. Die Ballenpresse 12 umfasst eine Auswurfeinheit 132, beispielsweise eine Auswurfklappe oder ein Heckteil oder eine Heckklappe der Ballenpresse. Die Auswurfeinheit 132 ist schwenkbar an der Ballenpresse 12, insbesondere dem Ballenpressenrahmen 114 oder einem Gehäuseteil, gelagert. Die Auswurfeinheit 132 ist um eine Achse 134 schwenkbar, die sich quer zur Vorwärtsrichtung eines Zugfahrzeugs 10 (siehe Figur 2) und/oder der Ballenpresse 12 erstreckt. Die Auswurfeinheit 132 ist zwischen einer ersten Position, in der die Presseinheit 112 geschlossen ist, und einer zweiten Position bewegbar, in der die Presseinheit 112 zum Entladen des Ballens geöffnet ist. Ausserdem kann die Ballenpresse 12 eine Rampe umfassen, um den Ballen 200 auf den Boden 156 abzulegen.

Die Steuereinheit 60 ist mit einem Aktuator 138 verbunden. Der Aktuator 138 kann beispielsweise in Form eines Pneumatikzylinders oder Hebekissens oder Gewindetriebs oder Zahnstangentriebs oder Elektrozylinders ausgebildet sein. Der Aktuator 138 ist vorliegend als Hydraulikzylinder ausgebildet. Die Steuereinheit 60 kann insbesondere über eine Ventilanordnung 80, insbesondere eine erste Ventilanordnung, mit dem Aktuator 138 verbunden sein. Die Auswurfeinheit 132 ist mit dem Aktuator 138 zwischen der ersten Position, in der die Presseinheit 112 geschlossen ist, und der zweiten Position bewegbar, in der die Presseinheit 112 zum Entladen des Ballens geöffnet ist. Der Aktuator 138 in Form eines Hydraulikzylinders ist mit einem Ende mit der Ballenpresse 12, beispielsweise mit dem Ballenpressenrahmen 114 bzw. dem Gehäuse, und mit einem zweiten Ende mit der Auswurfeinheit 132 verbunden, insbesondere schwenkbar befestigt. Die Auswurfeinheit 132 kann aber auch schwenkbar angelenkt, also an einem Angelpunkt schwenkbar befestigt sein. Der Aktuator 138 kann mit der Auswurfeinheit 132 derart verbunden sein, dass er die Auswurfeinheit 132 um die Achse 134 nach oben (in Fig. 1 gegen den Uhrzeigersinn) schwenken kann, sodass der Ballen 200 aus der Presseinheit 112 auswerfbar ist. Die Auswurfeinheit 132 kann also mit dem Aktuator 138 geöffnet oder geschlossen bzw. angehoben und abgesenkt werden. Der Aktuator 138 kann mit der Steuereinheit 60 mit oder über die Ventilanordnung 80, beispielsweise über eine elektromagnetische oder eine hydraulische Ventilanordnung, eingestellt und/oder verstellt, insbesondere gesteuert und geregelt werden. Die Ventilanordnung 80 kann dabei mit der Steuereinheit 60 eingestellt und/oder verstellt, insbesondere gesteuert und geregelt werden. Ein Auswurfklappensensor 157 kann beispielsweise die Position des Aktuators 138 oder der Auswurfeinheit 132 erfassen.

Die Ballenpresse 12 umfasst einen Sensor 148 zur Erfassung eines Schallsignals. Der Sensor 148 ist mit der Steuereinheit 60 oder der Ballenpressensteuereinheit 110 verbunden, bevorzugt signalverbunden und/oder signalübertragend und/oder datenleitend verbunden. Wesentlich für die erfindungsgemässe Ballenpresse 12 ist, dass die Steuereinheit 60 konfiguriert ist, die Aufnahme des Ernteguts und das Pressen des Ballens anhand eines Sensorsignals 300 des Sensors 148 zu charakterisieren. Der Sensor 148 kann also mit der Ballenpresse 12 interagieren und die Aufnahme des Ernteguts sowie das Pressen des Ballens erfassen und/oder analysieren. Der Sensor 148 kann an der Presseinheit 112 und/oder der Aufnahmeeinheit 126 und/oder dem Ballenpressenrahmen 114 angeordnet sein. Der Sensor 148 kann ein Schallsensor, insbesondere ein Mikrophon oder ein Ultraschallsensor sein.

Die Aufnahmeeinheit 126 kann beispielsweise mit einem weiteren oder zweiten Aktuator 152, hier in Form eines Hydraulikzylinders, angehoben und abgesenkt werden. Der weitere Aktuator 152 kann mit der Steuereinheit 60, beispielsweise über die Ventilanordnung 80 oder eine weitere oder zweite Ventilanordnung (nicht dargestellt), eingestellt und/oder verstellt, insbesondere gesteuert und geregelt werden. Die weitere Ventilanordnung kann beispielsweise eine hydraulische oder elektromagnetische Ventilanordnung sein. Die weitere Ventilanordnung kann mit der Steuereinheit 60 eingestellt und/oder verstellt, insbesondere gesteuert und geregelt werden.

Die Steuereinheit 60 oder die Ballenpressensteuereinheit 110 kann konfiguriert sein, eine Amplitude und/oder Frequenz des Sensorsignals 300 zu ermitteln und die Aufnahme des Ernteguts und/oder das Pressen des Ballens der Presseinheit 112 mit der Amplitude und/oder der Frequenz zu charakterisieren. Ausserdem kann die Steuereinheit 60 oder die Ballenpressensteuereinheit 110 konfiguriert sein, die Amplitude und/oder die Frequenz des Sensorsignals 300 mit einem oder mehreren Schwellwert(en) zu vergleichen. Das Schallsignal kann in Abhängigkeit von der Zeit erfassbar sein und/oder die Steuereinheit 60 oder die Ballenpressensteuereinheit 110 kann konfiguriert sein, die Aufnahme des Ernteguts und/oder das Pressen des Ballens anhand des Sensorsignals 300 des Sensors in Abhängigkeit von der Zeit zu charakterisieren. Alternativ oder zusätzlich kann die Steuereinheit 60 oder die Ballenpressensteuereinheit 110 konfiguriert sein, die Amplitude und/oder die Frequenz des Sensorsignals 300 in Abhängigkeit von der Zeit zu ermitteln und/oder die Amplitude und/oder die Frequenz des Sensorsignals 300 in Abhängigkeit von der Zeit mit dem oder den Schwellwert(en) zu vergleichen. Ausserdem kann die Steuereinheit 60 oder die Ballenpressensteuereinheit 110 konfiguriert sein, das Sensorsignal zu filtern und/oder zu bearbeiten. Im Speziellen kann die Steuereinheit 60 oder die Ballenpressensteuereinheit 110 konfiguriert sein, die Aufnahme des Ernteguts und/oder das Pressen des Ballens anhand eines repräsentierenden Modells in Abhängigkeit vom Sensorsignals 300 des Sensors 148 zu charakterisieren, insbesondere zu erfassen und/oder zu ermitteln.

Figur 2 zeigt eine schematische Darstellung eines ersten Ausführungsbeispiels einer erfindungsgemässen Kombination 1 aus einem Zugfahrzeug 10 mit einem Antriebsstrang 36 zum Antreiben der Kombination 1, insbesondere des Zugfahrzeugs 10, und einer mittels einer Deichsel 14 vom Zugfahrzeug 10 gezogenen erfindungsgemässen Ballenpresse 12, insbesondere gemäss Figur 1. Die in Figur 2 gezeigte Ballenpresse 12 entspricht im Wesentlichen der in Figur 1 gezeigten Ballenpresse 12, sodass im Folgenden lediglich auf Details und/oder Unterschiede eingegangen wird. Die in Figur 1 gezeigte Ballenpresse 12 kann die im Folgenden beschriebenen zusätzlichen Merkmale und Eigenschaften aufweisen.

Die Kombination 1 umfasst ein Zugfahrzeug 10 und die mittels einer Deichsel 14 vom Zugfahrzeug 10 gezogenen Ballenpresse 12. Das Zugfahrzeug 10 umfasst einen Antriebsstrang 36, welcher mit einer Antriebswelle 56 der Ballenpresse 12 verbunden sein kann. Das Zugfahrzeug 10, insbesondere der Antriebsstrang 36, umfasst einen Motor 38, beispielsweise eine Verbrennungskraftmaschine oder einen Elektromotor. Das Zugfahrzeug 10, insbesondere das Antriebsstrang 36, kann ausserdem eine Getriebeeinheit 40, insbesondere ein Getriebe, umfassen. Der Motor 38 kann ausserdem direkt oder indirekt mit einer Eingangswelle der Antriebseinheit 56 der Ballenpresse 12 mechanisch verbunden sein.

Die Kombination 1 bzw. das Zugfahrzeug 10 umfasst die Ein- und Ausgabeeinheit 74. Die Steuereinheit 60 kann auch im Zugfahrzeug 10 angeordnet sein. Ebenso kann die Steuereinheit 60 aber auch als Zugfahrzeugsteuereinheit 170 und Ballenpressensteuereinheit 110 ausgebildet sein, wobei die Ballenpresse 12 die Ballenpressensteuereinheit 110 und das Zugfahrzeug 10 die Zugfahrzeugsteuereinheit 170 umfassen kann. Die Ballenpressensteuereinheit 110 und die Zugfahrzeugsteuereinheit 170 können jeweils einzeln als Steuereinheit 60 ausgebildet sein oder zusammen die den Aufbau und alle Funktionalitäten und alle Verbindungen der Steuereinheit 60 aufweisen. Die Steuereinheit 60 ist mit der Ein- und Ausgabeeinheit 74 verbunden, bevorzugt signalverbunden und/oder signalübertragend und/oder datenleitend verbunden. Mit der in einer Kabine 24 des Zugfahrzeugs angeordneten Ein- und Ausgabeeinheit 74 können von einem Bediener der Kombination 1 in die Ein- und Ausgabeeinheit 74 eingegebene Daten oder Befehle an die Steuereinheit 60 übertragen oder von dieser empfangen werden. Die Daten und Befehle können mit der Ein- und Ausgabeeinheit 74 und ausgegeben werden.

Das Zugfahrzeug 10 kann einen Zugfahrzeugrahmen 18 umfassen, insbesondere auf dem Zugfahrzeugrahmen 18 getragen sein. Der Zugfahrzeugrahmen 18 kann auf Bodeneingriffsmittel getragen sein. Die Bodeneingriffsmittel, hier in Form von Vorderrädern 20 und Hinterrädern 22 dargestellt, stehen mit einem Untergrund zur Übertragung von Antriebskräften in Eingriff und/oder das Zugfahrzeug 10 stützt sich mit diesen auf dem Untergrund ab. Die Bodeneingriffsmittel, insbesondere die Vorderräder 20 und Hinterräder 22 können lenkbar und/oder beweglich sein. Die Kabine 24 kann vom Zugfahrzeugrahmen 18 getragen sein. Ausserdem kann sich in der Kabine 24 eine Arbeitsstation des Bedieners und/oder die Ein- und Ausgabeeinheit 74 befinden. Das Zugfahrzeug 10 umfasst eine Vorderachse 28 und eine Hinterachse 30. Die Hinterachse 30 kann permanent und die Vorderachse 28 kann überhaupt nicht oder bedarfsweise zuschaltbar oder permanent angetrieben werden. Die Vorderachse 28, und/oder insbesondere die Hinterachse 30 können lenkbar sein. Das Zugfahrzeugs 10 kann beispielsweise auch ein Gaspedal 16 oder einen nicht gezeigten Handgashebel umfassen. Im Folgenden beziehen sich Richtungsangaben wie vorne und hinten, links und rechts auf die Vorwärtsrichtung 300 des Zugfahrzeugs 10, die in Fig. 1 nach links geht.

Die Ballenpresse 12 ist mit dem Zugfahrzeug 10 verbunden, und/oder insbesondere gekoppelt. Das Zugfahrzeug 10 ist durch die Deichsel 14 mit der Ballenpresse 12 verbunden. Beispielsweise kann die Ballenpresse 12 mit der Deichsel 14 an eine Anhängerkupplung 15 (engl. Hitch) des Zugfahrzeugs 10 gekoppelt sein. Das Zugfahrzeug 10 kann die Ballenpresse 12 ziehen. Das Zugfahrzeug 10 kann eine Zapfwelleneinheit 180 umfassen. Die Zapfwelleneinheit 180 kann insbesondere ein Zapfwellengetriebe 182 und/oder eine Zapfwelle 184 umfassen. Die Zapfwelleneinheit 180 kann mit dem Antriebsstrang 36, insbesondere dem Motor 82 und/oder der Getriebeeinheit 84 antreibbar sein. Die Zapfwelleneinheit 180 kann mit der Ballenpresse 12 zum Antreiben der Presseinheit 112 und der Aufnahmeeinheit 126 mechanisch verbunden sein.

Die Steuereinheit 60 oder die Ballenpressensteuereinheit 110 oder die Zugfahrzeugsteuereinheit 170 kann konfiguriert sein, ein Aufnahmesignal und/oder ein Presssignal in Abhängigkeit vom Sensorsignal 300 zu generieren und/oder zu versenden. Die Steuereinheit 60 oder die Zugfahrzeugsteuereinheit 170 kann konfiguriert sein, mit dem oder basierend auf dem Aufnahmesignal und/oder dem Presssignal die Ein- und Ausgabeeinheit 74 anzusteuern. Die Ein- und Ausgabeeinheit 74 kann konfiguriert sein, dem Bediener mit dem oder basierend auf dem Aufnahmesignal und/oder dem Presssignal zu signalisieren, dass die Ballenpresse 12 in einer Aufnahmephase oder einer Pressphase ist. Im Speziellen kann die Ballenpressensteuereinheit 110 oder die Steuereinheit 60 konfiguriert sein, dem Bediener mit dem oder basierend auf dem Aufnahmesignal und/oder dem Presssignal zu signalisieren, dass der Ballen 200 vollständig ausgebildet ist.

Im Weiteren kann die Steuereinheit 60 oder die Ballenpressensteuereinheit 110 oder die Zugfahrzeugsteuereinheit 170 konfiguriert sein, in Abhängigkeit vom Sensorsignal 300, insbesondere von der Amplitude und/oder der Anzahl der Amplituden und/oder der Frequenz, ein Fahrsignal und/oder ein Stellsignal zu generieren und/oder zu versenden. Die Steuereinheit 60 oder die Ballenpressensteuereinheit 110 oder die Zugfahrzeugsteuereinheit 170 kann konfiguriert sein, mit dem Fahrsignal eine Geschwindigkeit der Kombination 1, insbesondere den Antriebsstrang 36, und/oder mit dem Stellsignal die Zapfwelleneinheit 180 einzustellen und/oder zu verstellen. Die Steuereinheit 60 oder die Ballenpressensteuereinheit 110 oder die Zugfahrzeugsteuereinheit 170 kann konfiguriert sein, mit dem Fahrsignal den Antriebsstrang 36 (derart) anzusteuern und/oder einzustellen und/oder zu verstellen, dass eine Drehzahl und/oder ein Drehmoment und/oder eine Energie des Antriebsstrangs 36 erhöht oder verringert wird. Die Steuereinheit 60 oder die Zugfahrzeugsteuereinheit 170 kann konfiguriert sein, mit dem oder basierend auf dem Fahrsignal die Ein- und Ausgabeeinheit 74 anzusteuern, sodass die Ein- und Ausgabeeinheit 74 dem Bediener signalisiert, eine Geschwindigkeit des Zugfahrzeugs 10 zu ändern oder die Ein- und Ausgabeeinheit 74 konfiguriert ist dem Bediener zu signalisieren, eine Geschwindigkeit des Zugfahrzeugs 12 zu ändern. Die Steuereinheit 60 oder die Zugfahrzeugsteuereinheit 170 kann konfiguriert sein, mit dem oder basierend auf dem Fahrsignal die Ein- und Ausgabeeinheit 74 anzusteuern, sodass die Ein- und Ausgabeeinheit 74 dem Bediener signalisiert, eine Geschwindigkeit des Zugfahrzeugs 10 zu ändern oder die Ein- und Ausgabeeinheit 74 konfiguriert ist dem Bediener zu signalisieren, eine Geschwindigkeit des Zugfahrzeugs 12 zu ändern.

Die Steuereinheit 60 oder die Ballenpressensteuereinheit 110 oder die Zugfahrzeugsteuereinheit 170 kann konfiguriert sein, mit dem Stellsignal die Zapfwelleneinheit 180 (derart) anzusteuern und/oder einzustellen und/oder zu verstellen, dass eine Drehzahl und/oder ein Drehmoment und/oder eine Energie des der Zapfwelleneinheit 180 erhöht oder verringert wird. Die Steuereinheit 60 oder die Zugfahrzeugsteuereinheit 170 kann konfiguriert sein, mit dem oder basierend auf dem Stellsignal die Ein- und Ausgabeeinheit 74 anzusteuern, sodass die Ein- und Ausgabeeinheit 74 dem Bediener signalisiert, die Drehzahl und/oder ein Drehmoment und/oder eine Energie der Zapfwelleneinheit zu ändern.

Die Kombination 1, insbesondere das Zugfahrzeug 10, kann auch eine GPS-Einrichtung 32 zur Bestimmung der Position der Kombination 1 in Form eines Positionssignals umfassen. Die Steuereinheit 60 ist mit der GPS-Einrichtung 32 verbunden. Die Steuereinheit 60 empfängt das Positionssignal der GPS-Einrichtung 32. Die Steuereinheit 60 ist derart betreibbar, dass mit der Steuereinheit 60 in Abhängigkeit vom Positionssignal ein Entladewinkel und/oder eine Entladeposition bestimmbar und/oder ermittelbar ist. Mit der GPS-Einrichtung 32 könne also Positionsdaten versendbar und/oder empfangbar sein, und/oder insbesondere berechenbar sein. Die GPS-Einrichtung 32 kann beispielsweise eine Positionsdaten empfangende GPS-Antenne und einen Speicher umfassen. Im Speicher kann die Position des Schwads 130 gespeichert sein, die aus früheren Arbeitsgängen bekannt ist. Das Zugfahrzeug 10 kann dann so gelenkt werden, dass die tatsächliche Position der Kombination 1 oder des Zugfahrzeugs 10, die von der GPS-Antenne bereitgestellt werden, und die Position des Schwads 130 aus dem Speicher übereinstimmen.

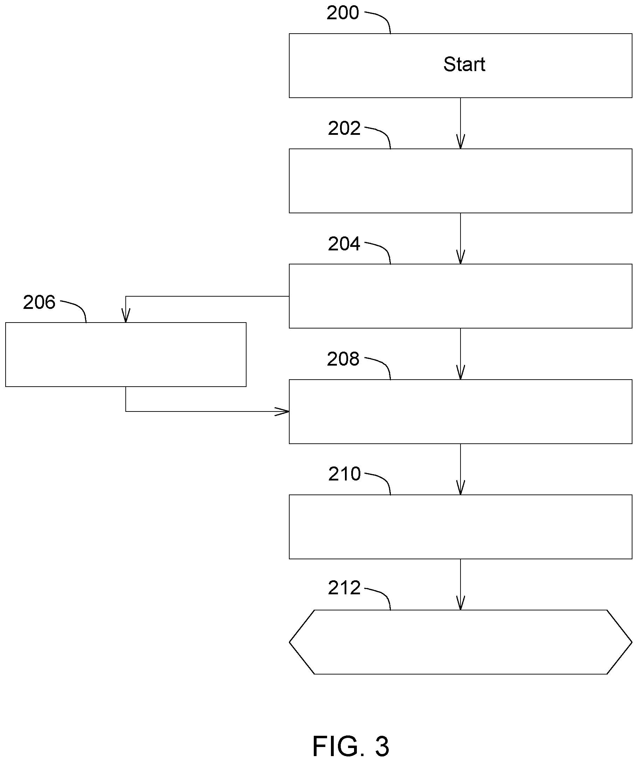

Figur 3 zeigt ein schematisches Flussdia-gramm des erfindungsgemässen Verfahrens, insbeson-dere wie die Steuereinheit 60 arbeitet und den Ablauf des Verfahrens. Die in Figur 2 gezeigte Arbeitsweise ist mit der in Figur 1 gezeigten Ballenpresse 12 durchführbar, wobei im Folgenden lediglich auf Details und/oder Unterschiede zu Figur 1 eingegangen wird.

Nach dem Start im Schritt 200 folgt der Schritt 202, in dem mit dem Sensor 148 ein Schallsignal an oder in der Ballenpresse 12 erfasst wird. Dabei kann der Pressvorgang, also die Aufnahme des Ernteguts und/oder das Pressen des Ballens, anhand eines Sensorsignals 300 des Sensors 148 charakterisiert werden. Insbesondere kann die Steuereinheit konfiguriert sein, eine Amplitude und/oder Frequenz des Sensorsignals 300 zu ermitteln und die Aufnahme des Ernteguts und/oder das Pressen des Ballens mit der Amplitude und/oder der Frequenz zu charakterisieren. Im Speziellen kann das Schallsignal in Abhängigkeit von der Zeit erfassbar sein. Unter charakterisieren kann verstanden werden, dass der Pressvorgang von den Sensorsignalen, insbesondere von den Sensorsignalen in Abhängigkeit von der Zeit, erfasst und/oder wiedergegeben wird.

In einem optionalen Schritt 204 kann das Sensorsignal, insbesondere können die Sensorsignale in Abhängigkeit von der Zeit, gefiltert und/oder bearbeitet werden, insbesondere seine Amplitude verändert werden. Im Speziellen kann das Sensorsignal, insbesondere können die Sensorsignale in Abhängigkeit von der Zeit, mit einer FourierTransformation verarbeitet und/oder Hoch-Pass- und/oder Tiefpassfilter auf die Signale oder deren Fourier-Transformierte angewendet werden.

In einem optionalen Schritt 206 kann der Pressvorgang anhand eines den Pressvorgang, insbesondere die Aufnahme des Ernteguts und/oder das Pressen des Ballens, repräsentierenden Modells in Abhängigkeit vom Sensorsignal des Sensors, insbesondere von den Sensorsignale in Abhängigkeit von der Zeit, charakterisiert werden. Das Modell kann dabei eine softwaremäßige Darstellung oder Simulation oder eine Funktion des Wickelvorgangs sein. Mittels Ausgleichungsrechnung die können die Parameter der Funktion bestimmt oder geschätzt werden.

In einem optionalen Schritt 208 kann oder können die Amplituden und/oder die Frequenzen des Sensorsignals 300, insbesondere der Sensorsignale in Abhängigkeit von der Zeit, und/oder die Amplituden der Fourier-Transformierten des Sensorsignals 300, insbesondere der Sensorsignale in Abhängigkeit von der Zeit, ermittelt werden. Ebenso können die Amplituden und/oder Frequenzen anhand des den Pressvorgang repräsentierenden Modells ermittelt werden.

In einem weiteren optionalen Schritt 210 können die Amplitude und/oder Frequenzen des Sensorsignals 300, insbesondere die Amplituden und/oder Frequenzen des Sensorsignals 300 in Abhängigkeit von der Zeit und/oder die Amplituden und/oder Frequenzen des den Wickelvorgang repräsentierenden Modells, mit einem oder mehreren Schwellwert verglichen werden.

In einem weiteren Schritt 212 kann die Steuereinheit 60 konfiguriert sein, ein Aufnahmesignal und/oder ein Presssignal in Abhängigkeit vom Sensorsignal

300 zu generieren und/oder zu versenden. Alternativ oder zusätzlich kann die Steuereinheit 60 konfiguriert sein, in Abhängigkeit vom Sensorsignal 300, insbesondere von der Amplitude 304 und/oder der Frequenz, ein Fahrsignal und/oder ein Stellsignal zu generieren und/oder zu versenden, insbesondere den Antriebsstrang und/oder die Zapfwelleneinheit wie oben beschreiben einzustellen und/oder zu verstellen.

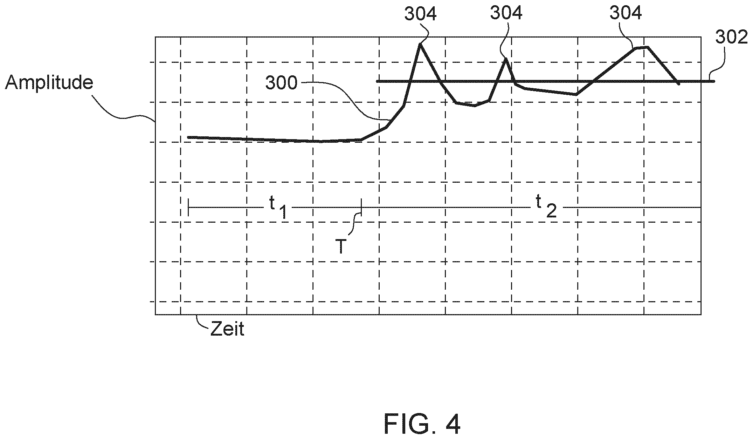

Figur 4 zeigt eine schematische Darstellung des Verlaufs der Amplitude des Sensorsignals 300 während der Aufnahme und dem Pressen des Ernteguts, also insbesondere während des Pressvorgangs. Das in Figur 4 gezeigte Sensorsignal 300 entspricht im Wesentlichen dem in den Figuren 1 bis 3 offenbarte Sensorsignal 300, sodass im Folgenden lediglich auf Details und/oder Unterschiede eingegangen wird. Auf der Abszisse, also der X-Achse, ist die Zeit und auf der Ordinate, also der Y-Achse, ist die Amplitude des Sensorsignals aufgetragen. Das gezeigte Sensorsignal 300, kann das Sensorsignal 300 des Sensors 148, insbesondere das Sensorsignal 300 in Abhängigkeit von der Zeit sein oder des repräsentierenden Modells sein. In einem Zeitabschnitt $t_1$ liegt das Sensorsignal 300, insbesondere die Amplitude 304, unterhalb des Schwellwertes 302. Es kann beispielsweise nur der Schall erfasst werden, der beispielsweise durch Vibrationen, insbesondere der Ballenpresse 12, oder durch die Aufnahme von Erntegut verursacht wird. Liegt die Amplitude 304 unterhalb des Schwellwertes kann entweder das Aufnahmesignal und/oder das Fahrsignal und/oder das Stellsignal generiert und versendet werden. Alternativ kann, wenn die Amplitude 304 unterhalb des Schwellwertes 302 liegt, das Presssignal und/oder das Fahrsignal und/oder das Stellsignal generiert und versendet werden. Ab dem Zeitpunkt T beginnt ein weiterer Zeitabschnitt $t_2$, dem das Pressen des Ballens entspricht. Ab diesem Zeitpunkt T steigt die Amplitude 304 des Sensorsignals 300 an. Die Amplituden 304 liegen über dem Schwellwert 302. Liegt die Amplitude 304 oberhalb des Schwellwertes 302 kann entweder das Aufnahmesignal und/oder das Fahrsignal und/oder das Stellsignal generiert und versendet werden. Alternativ kann, wenn die Amplitude 304 oberhalb des Schwellwertes 302 liegt, das Presssignal und/oder das Fahrsignal und/oder das Stellsignal generiert und versendet werden.

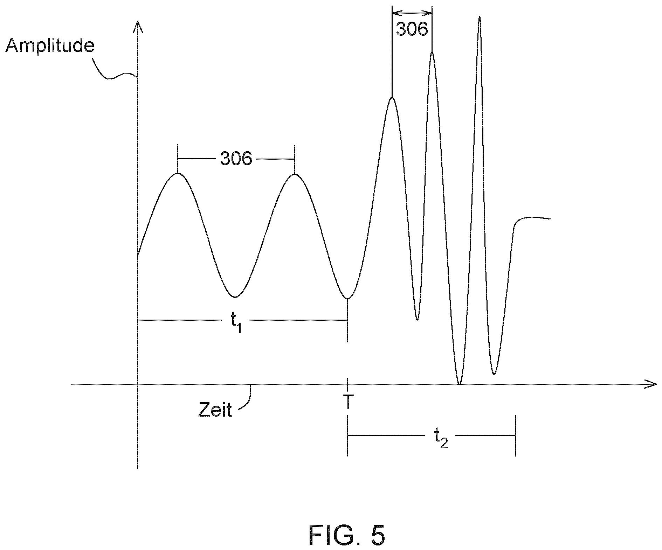

Figur 5 zeigt eine schematische Darstellung des Verlaufs der Frequenz 306 des Sensorsignals 300 während der Aufnahme und dem Pressen des Ernteguts, also insbesondere während des Pressvorgangs. Das in Figur 5 gezeigte Sensorsignal 300 entspricht im Wesentlichen dem in den Figuren 1 bis 4 offenbarte Sensorsignal 300, sodass im Folgenden lediglich auf Details und/oder Unterschiede eingegangen wird. Auf der Abszisse, also der X-Achse, ist die Zeit und auf der Ordinate, also der Y-Achse, ist die Amplitude des Sensorsignals aufgetragen. Das gezeigte Sensorsignal 300, kann das Sensorsignal 300 des Sensors 148, insbesondere das Sensorsignal 300 in Abhängigkeit von der Zeit sein oder des repräsentierenden Modells sein. Die Frequenz 306 kann sich dabei aus der Periodendauer ergeben. In einem Zeitabschnitt $t_1$ liegt das Sensorsignal 300, insbesondere die Frequenz 306, unterhalb des Schwellwertes, insbesondere des Frequenzschwellwertes. Liegt die Frequenz 306 unterhalb des Schwellwertes kann entweder das Aufnahmesignal und/oder das Fahrsignal und/oder das Stellsignal generiert und versendet werden. Alternativ kann, wenn die Frequenz 306 unterhalb des Schwellwertes liegt, das Presssignal und/oder das Fahrsignal und/oder das Stellsignal generiert und versendet werden. Ab dem Zeitpunkt T beginnt ein weiterer Zeitabschnitt $t_2$, dem das Pressen des Ballens entspricht. Ab diesem Zeitpunkt T steigt die Frequenz 306 des Sensorsignals 300 an. Die Frequenz 306 liegt über dem Schwellwert. Liegt die Frequenz 306 oberhalb des Schwellwertes kann entweder das Aufnahmesignal und/oder das Fahrsignal und/oder das Stellsignal generiert und versendet werden. Alternativ kann, wenn die Frequenz 306 oberhalb des Schwellwertes liegt, das Presssignal und/oder das Fahrsignal und/oder das Stellsignal generiert und versendet werden.

**Patentansprüche**

1. Zugfahrzeug-Ballenpressen-Kombination, umfassend ein Zugfahrzeug (10) und eine Ballenpresse (12), wobei die Ballenpresse (12) eine Aufnahmeeinheit (126), zum Aufnehmen eines Ernteguts vom Boden und zur Zufuhr des Ernteguts in eine Presseinheit (112), und die Presseinheit (112) zum Aufnehmen des Ernteguts von der Aufnahmeeinheit (126) und zum Pressen eines Ballens (200) umfasst, und die Kombination (1) eine Steuereinheit (60) und einen Sensor (148) zur Erfassung eines Schallsignals umfasst, und die Steuereinheit mit dem Sensor (148) verbunden ist, **dadurch gekennzeichnet, dass** die Steuereinheit (60) konfiguriert ist, die Aufnahme des Ernteguts und das Pressen des Ballens anhand eines Sensorsignals (300) des Sensors (148) zu charakterisieren.

2. Kombination nach Anspruch 1, **dadurch gekennzeichnet, dass** die Steuereinheit (60) konfiguriert ist, eine Amplitude (304) und/oder Frequenz (306) des Sensorsignals (300) zu ermitteln, und die Aufnahme des Ernteguts und/oder das Pressen des Ballens (200) mit der Amplitude (304) und/oder der Frequenz (306) zu charakterisieren.

3. Kombination nach Anspruch 1 oder 2, **dadurch gekennzeichnet, dass** die Steuereinheit (60) konfiguriert ist die Amplitude (304) und/oder die Frequenz (306) des Sensorsignals (300) mit einem Schwellwert (302) zu vergleichen.

4. Kombination nach einem der vorangehenden Ansprüche, **dadurch gekennzeichnet, dass** das Schallsignal in Abhängigkeit von der Zeit erfassbar ist, und/oder die Steuereinheit (60) konfiguriert ist, die Aufnahme des Ernteguts und/oder das Pressen des Ballens anhand des Sensorsignals (300) des Sensors (148) in Abhängigkeit von der Zeit zu charakterisieren, und/oder die Steuereinheit (60) konfiguriert ist die Amplitude (304) und/oder die Frequenz (306) des Sensorsignals (300) in Abhängigkeit von der Zeit zu ermitteln, und/oder die Amplitude (304) und/oder die Frequenz (306) des Sensorsignals (300) in Abhängigkeit von der Zeit mit dem Schwellwert (302) zu vergleichen.

5. Kombination nach einem der vorangehenden Ansprüche, **dadurch gekennzeichnet, dass** die Steuereinheit (60) konfiguriert, das Sensorsignal (300) zu filtern und/oder zu bearbeiten.

6. Kombination nach einem der vorangehenden Ansprüche, **dadurch gekennzeichnet, dass** die Steuereinheit (60) konfiguriert ist, ein Aufnahmesignal und/oder ein Presssignal in Abhängigkeit vom Sensorsignal (300) zu generieren und/oder zu versenden.

7. Kombination nach einem der vorangehenden Ansprüche, **dadurch gekennzeichnet, dass** die Steuereinheit (60) konfiguriert ist, in Abhängigkeit vom Sensorsignal (300), insbesondere von der Amplitude (304) und/oder der Frequenz (306), ein Fahrsignal und/oder ein Stellsignal zu generieren und/oder zu versenden.

8. Kombination nach Anspruch 7, **dadurch gekennzeichnet, dass** das Zugfahrzeug (10) einen Antriebsstrang (36) zum Antrieb des Zugfahrzeugs (10) und/oder eine Zapfwelleneinheit (180) umfasst, und die Steuereinheit (60) mit dem Antriebsstrang (36) und/oder der Zapfwelleneinheit (180) verbunden ist, wobei die Steuereinheit (60) konfiguriert ist, mit dem Fahrsignal eine Geschwindigkeit der Kombination (1), insbesondere den Antriebsstrang (36), und/oder mit dem Stellsignal die Zapfwelleneinheit (180) einzustellen und/oder zu verstellen.

9. Kombination nach einem der vorangehenden Ansprüche, **dadurch gekennzeichnet, dass** der Sensor (148) an der Presseinheit (112) und/oder der Aufnahmeeinheit (126) und/oder einem Ballenpressenrahmen (114) der Ballenpresse (12) angeordnet ist.

10. Kombination nach einem der vorangehenden Ansprüche, **dadurch gekennzeichnet, dass** der Sensor (148) ein Schallsensor, insbesondere ein Mikrophon oder ein Ultraschallsensor ist.

**11.** Kombination nach einem der vorangehenden Ansprüche, **dadurch gekennzeichnet, dass** die Steuereinheit (60) konfiguriert ist, die Aufnahme des Ernteguts und/oder das Pressen des Ballens (200) anhand eines repräsentierenden Modells in Abhängigkeit vom Sensorsignals (300) des Sensors (148) charakterisieren, insbesondere zu erfassen und/oder zu ermitteln.

**12.** Ballenpresse für eine Zugfahrzeug-Ballenpressen-Kombination (1) nach einem der Ansprüche 1 bis 11.

**13.** Verfahren zum Betreiben einer Kombination (1), insbesondere einer Kombination (1) nach mindestens einem der Ansprüche 1 bis 11, oder einer Ballenpresse (12), insbesondere einer Ballenpresse (12) nach Anspruch 12.

FIG. 1

EP 4 691 220 A1

FIG. 2

200 ⌐

| Start |

202 ⌐

| |

204 ⌐

| |

206 ⌐

| |

208 ⌐

| |

210 ⌐

| |

212 ⌐

FIG. 3

FIG. 4

FIG. 5

Europäisches
Patentamt

European
Patent Office

Office européen
des brevets

## EUROPÄISCHER RECHERCHENBERICHT

**Nummer der Anmeldung**

EP 24 19 3778

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 11 974 522 B2 (CNH IND AMERICA LLC [US]) 7. Mai 2024 (2024-05-07) | 1-7,9-13 | INV. A01F15/08 |
| A | * Zusammenfassung * <br> * Abbildungen 1-3 * <br> * Spalte 4, Zeile 13 - Zeile 30 * <br> * Spalte 5, Zeile 3 - Zeile 25 * <br> ----- | 8 | |
| A | US 9 008 920 B1 (SMITH KEVIN M [US] ET AL) 14. April 2015 (2015-04-14) <br> * das ganze Dokument * <br> ----- | 1,11-13 | |
| A | US 2023/354751 A1 (OSTERMANN PHILIPPE [FR] ET AL) 9. November 2023 (2023-11-09) <br> * das ganze Dokument * <br> ----- | 1,11,13 | |
| A | EP 2 526 759 B1 (KRONE BERNARD MASCHF GMBH [DE]) 2. März 2016 (2016-03-02) <br> * das ganze Dokument * <br> ----- | 1-11,13 | |
| A | EP 4 272 542 A1 (DEERE & CO [US]) 8. November 2023 (2023-11-08) <br> * das ganze Dokument * <br> ----- | 1-11,13 | RECHERCHIERTE SACHGEBIETE (IPC) <br><br> A01F |
| A | US 2021/031624 A1 (ISHIKAWA SHINNOSUKE [JP] ET AL) 4. Februar 2021 (2021-02-04) <br> * das ganze Dokument * <br> ----- | 1-11,13 | |
| A | US 7 937 923 B2 (DEERE & CO [US]) 10. Mai 2011 (2011-05-10) <br> * das ganze Dokument * <br> ----- | 1-11,13 | |
| A | US 2007/175198 A1 (VIAUD JEAN [FR] ET AL) 2. August 2007 (2007-08-02) <br> * das ganze Dokument * <br> ----- | 1-11,13 | |
| A | EP 3 298 872 B1 (DEERE & CO [US]) 2. Dezember 2020 (2020-12-02) <br> * das ganze Dokument * <br> ----- | 1-11,13 | |

Der vorliegende Recherchenbericht wurde für alle Patentansprüche erstellt

| Recherchenort | Abschlußdatum der Recherche | Prüfer |
|---|---|---|
| München | 17. Januar 2025 | Giorgini, Gabriele |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 19 3778

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-01-2025

| Im Recherchenbericht angeführtes Patentdokument | Datum der Veröffentlichung | Mitglied(er) der Patentfamilie | Datum der Veröffentlichung |
|---|---|---|---|
| US 11974522 B2 | 07-05-2024 | EP 4018814 A1 | 29-06-2022 |
| | | US 2022192098 A1 | 23-06-2022 |
| US 9008920 B1 | 14-04-2015 | EP 2883440 A1 | 17-06-2015 |
| | | US 9008920 B1 | 14-04-2015 |
| US 2023354751 A1 | 09-11-2023 | EP 4272541 A1 | 08-11-2023 |
| | | US 2023354751 A1 | 09-11-2023 |
| | | US 2023359214 A1 | 09-11-2023 |
| EP 2526759 B1 | 02-03-2016 | DE 102011102525 A1 | 29-11-2012 |
| | | EP 2526759 A1 | 28-11-2012 |
| EP 4272542 A1 | 08-11-2023 | KEINE | |
| US 2021031624 A1 | 04-02-2021 | EP 3771327 A1 | 03-02-2021 |
| | | JP 7157713 B2 | 20-10-2022 |
| | | JP 2021019570 A | 18-02-2021 |
| | | US 2021031624 A1 | 04-02-2021 |
| US 7937923 B2 | 10-05-2011 | KEINE | |
| US 2007175198 A1 | 02-08-2007 | AT E433279 T1 | 15-06-2009 |
| | | EP 1813146 A2 | 01-08-2007 |
| | | EP 2036426 A1 | 18-03-2009 |
| | | US 2007175198 A1 | 02-08-2007 |
| | | US 2008224445 A1 | 18-09-2008 |
| EP 3298872 B1 | 02-12-2020 | DE 102016218595 A1 | 29-03-2018 |
| | | EP 3298872 A1 | 28-03-2018 |
| | | US 2018084723 A1 | 29-03-2018 |

EPO FORM P0461

Für nähere Einzelheiten zu diesem Anhang : siehe Amtsblatt des Europäischen Patentamts, Nr.12/82